# EUROPEAN PATENT SPECIFICATION

(11) **EP 4 184 659 B1**
(45) Date of publication and mention of the grant of the patent: **26.08.2026**
(21) Application number: 21952113.5
(22) Date of filing: 30.09.2021
(51) Int. Cl.: H01M 10/613

(54) **BATTERY CELL, BATTERY, ELECTRICAL DEVICE, AND METHOD AND APPARATUS FOR MANUFACTURING BATTERY CELL**
BATTERIEZELLE, BATTERIE, ELEKTRISCHE VORRICHTUNG SOWIE VERFAHREN UND VORRICHTUNG ZUR HERSTELLUNG DER BATTERIEZELLE
ÉLÉMENT DE BATTERIE, BATTERIE, DISPOSITIF ÉLECTRIQUE, ET PROCÉDÉ ET APPAREIL DE FABRICATION D'ÉLÉMENT DE BATTERIE

(43) Date of publication of application: 24.05.2023
(73) Proprietor: Contemporary Amperex Technology (Hong Kong) Limited, Central, Central And Western District (HK)
(72) Inventor: XIAO, Haihe, Ningde Fujian 352100 (CN); ZHANG, Xiaowen, Ningde Fujian 352100 (CN); LI, Baiqing, Ningde Fujian 352100 (CN); JIN, Haizu, Ningde Fujian 352100 (CN); ZHOU, Xigen, Ningde Fujian 352100 (CN)
(74) Representative: Kraus & Lederer PartGmbB
(86) International application number: PCT/CN2021/122037
(87) International publication number: WO 2023/050254

(56) References cited:
- WO-A1-2020/192206
- CN-A- 102 347 515
- CN-A- 102 683 755
- CN-A- 109 742 436
- CN-U- 214 203 834
- US-A1- 2012 225 342
- US-A1- 2015 340 662
- US-A1- 2016 293 929
- US-A1- 2017 324 125

## Description

### TECHNICAL FIELD

This application relates to the technical field of batteries, and in particular, to a battery cell, a battery, an electrical device, and a method for manufacturing a battery cell.

### BACKGROUND

Energy conservation and emission reduction are key to sustainable development of the automobile industry, and electric vehicles have become an important part of the sustainable development of the automobile industry by virtue of energy saving and environmental friendliness. Battery technology is crucial to development of electric vehicles. US 2012/225342 A1 discloses a secondary battery including at least two electrode assemblies, each electrode assembly including a first electrode plate, a separator, and a second electrode plate, a case accommodating the at least two electrode assemblies, electrode terminals electrically connected to the at least two electrode assemblies, a cap plate sealing the case and exposing the electrode terminals to the outside, and at least one insulation member between the at least two electrode assemblies, the insulation member defining a space between the at least two electrode assemblies. WO 2020/192206 A1 discloses a battery. A first current collector in the battery is in contact with a battery shell, so that some heat generated by a cell can be directly conducted to the battery shell through the first current collector. A heat conductivity coefficient of a current collector is very large, so the heat dissipation performance of a cell is improved. The battery comprises: a battery shell, a first current collector, a diaphragm and a second current collector, wherein the first current collector, the diaphragm and the second current collector are stacked and arranged inside the battery shell, the first current collector and the second current collector are different in polarity, and the first current collector is in contact with the battery shell.

During charge-and-discharge cycles of a battery in use, a battery cell in the battery generates heat, thereby impairing the lifespan of the battery.

### SUMMARY

This application provides a battery cell, a battery, an electrical device, and a method for manufacturing a battery cell to accelerate heat dissipation of the battery cell and increase a lifespan of the battery.

According to a first aspect, this application provides a battery cell, including:
a housing comprising a first and second side face, the second side face being opposite to the first side face; a positive post mounted on the first side face and a negative post mounted on the second side face;
a first body portion, disposed in the housing, where the first body portion includes a first positive electrode plate and a first negative electrode plate; and
a second body portion, disposed in the housing, where the second body portion includes a second positive electrode plate and a second negative electrode plate.

The first body portion and the second body portion are arranged at intervals along a first direction. The first body portion and the second body portion are both jelly-roll structures. The first direction is the winding centerline of the first body portion and the second body portion. The first side face and the second side face are parallel to the first direction. An end of the first positive electrode plate, which is oriented away from the second body portion along the first direction, protrudes beyond the first body portion and contacts a first inner surface of the housing, and the first negative electrode plate is insulated from the first inner surface of the housing; and/or, an end of the second positive electrode plate, which is oriented away from the first body portion along the first direction, protrudes beyond the second body portion and contacts a second inner surface of the housing, the second negative electrode plate is insulated from the second inner surface of the housing, and the first inner surface is disposed opposite to the second inner surface.

In this embodiment of this application, the end of the first positive electrode plate of the first body portion, which is oriented away from the second body portion along the first direction, protrudes beyond the first body portion and directly contacts the first inner surface of the housing, and the end of the second positive electrode plate of the second body portion, which is oriented away from the first body portion along the first direction, protrudes beyond the second body portion and directly contacts the second inner surface of the housing. That is, both ends of an electrode assembly may be in direct contact with the housing, thereby increasing the area of direct contact between the housing and the entire battery cell formed of a first electrode assembly and a second electrode assembly. In this way, the heat generated inside the battery cell can be more quickly dissipated through the direct contact with the housing, thereby increasing heat dissipation capabilities of the battery cell, preventing the heat from accumulating in the housing to cause overtemperature of the battery, and effectively increasing the lifespan of the battery.

In some embodiments, the first positive electrode plate includes a first current collector and a first active material layer formed on the first current collector. An end of the first current collector, which is oriented away from the second body portion along the first direction, protrudes beyond the first active material layer and contacts the first inner surface of the housing. The second positive electrode plate includes a second current collector and a second active material layer formed on the second current collector. An end of the second current collector, which is oriented away from the first body portion along the first direction, protrudes beyond the second active material layer and contacts the second inner surface of the housing.

In this embodiment, the first current collector collects the current generated by the first active material layer, so as to form a larger current to be output. The first current collector, as a carrier of current collected, is a component that is prone to generate heat. Therefore, the first current collector is set to protrude toward the housing against the first body portion to facilitate direct contact between the first current collector and the housing, thereby effectively improving heat transfer efficiency and helping to rapidly reduce the temperature of the battery cell.

The second current collector collects the current generated by the second active material layer, so as to form a larger current to be output. The second current collector, as a carrier of current collected, is a component that is prone to generate heat. Therefore, the second current collector is set to protrude toward the housing against the second body portion to facilitate direct contact between the second current collector and the housing, thereby effectively improving heat transfer efficiency and helping to rapidly reduce the temperature of the battery cell.

In some embodiments, an end of the first negative electrode plate, which is oriented away from the second body portion along the first direction, is at a first preset distance from the first inner surface of the housing. An end of the second negative electrode plate, which is oriented away from the first body portion along the first direction, is at a second preset distance from the second inner surface of the housing. In this way, the first negative electrode plate keeps insulated from the housing, and the second negative electrode plate keeps insulated from the housing, thereby preventing a short circuit caused by electrical conduction between the first positive electrode plate and the first negative electrode plate in a case that the first positive electrode plate is in contact with the housing, or by electrical conduction between the second positive electrode plate and the second negative electrode plate in a case that the second positive electrode plate is in contact with the housing. The short circuit impairs the safety of the battery cell.

In some embodiments, the battery cell further includes a first positive tab and a first negative tab that extend from the first body portion as well as a second positive tab and a second negative tab that extend from the second body portion. The first positive tab and the first negative tab are disposed at an end of the first body portion, where the end is close to the second body portion along the first direction. The second positive tab and the second negative tab are disposed at an end of the second body portion, where the end is close to the first body portion along the first direction.

In the foregoing embodiment, the first positive tab, the first negative tab, the second positive tab, and the second negative tab are all disposed in the space between the first body portion and the second body portion, thereby helping to increase the area of direct contact between the electrode assembly and the housing and enhancing the effect of heat transfer between the electrode assembly and the housing. Moreover, this can also shorten the distance between the first positive tab and the second positive tab and the distance between the first negative tab and the second negative tab, shorten the current transfer path, reduce energy consumption, reduce heat emission, and prevent overtemperature of the battery cell from impairing the lifespan and safety of the battery cell in use.

In some embodiments, the battery cell further includes a bracket. The bracket is disposed between the first body portion and the second body portion to make the first positive electrode plate keep in contact with the first inner surface of the housing, and to make the second positive electrode plate keep in contact with the second inner surface of the housing.

In the foregoing embodiment, the bracket disposed can support the first body portion and the second body portion, make the first positive electrode plate keep in contact with the first inner surface of the housing, and make the second positive electrode plate keep in contact with the second inner surface of the housing. In this way, it is prevented that, due to gravity, an external force, or other factors, the first positive electrode plate is remote from the first inner surface of the housing, and the second positive electrode plate is remote from the second inner surface of the housing. The remoteness impairs the heat transfer efficiency, reduces the heat dissipation speed, and results in overtemperature of the battery cell.

In some embodiments, the bracket includes a first support portion, a second support portion, and a third support portion connected between the first support portion and the second support portion. The first support portion is configured to serve as a support between the first body portion and a first positive tab and a support between the first body portion and a first negative tab. The second support portion is configured to serve as a support between the second body portion and a second positive tab and a support between the second body portion and a second negative tab. The advantages of the bracket with such a structure are: when the battery cell is in a working state, no matter whether the first electrode assembly or the second electrode assembly is located above, the first electrode assembly and the second electrode assembly can be supported effectively, thereby facilitating installation and operation.

In some embodiments, the battery cell further includes a first adapter piece and a second adapter piece. The first positive tab and the second positive tab are both connected to the first adapter piece. The first adapter piece is connected to the positive post. The first negative tab and the second negative tab are both connected to the second adapter piece. The second adapter piece is connected to the negative post.

In some of the above embodiments, the first positive tab and the second positive tab are both connected to the first adapter piece. The first negative tab and the second negative tab are both connected to the second adapter piece. Therefore, the first electrode assembly and the second electrode assembly share an adapter piece, thereby reducing the number of components of the battery cell and saving cost. In addition, the sharing of the adapter piece also simplifies the internal structural layout of the battery cell, saves space, and reduces the size of the battery cell.

In this embodiment, the positive post and the negative post are disposed on the two side faces of the housing respectively, where the two side faces are parallel to the first direction. In this way, the first positive tab and the second positive tab that are located between the first body portion and the second body portion can be conveniently connected to the positive post by extending transversely, and the first negative tab and the second negative tab that are located between the first body portion and the second body portion can be conveniently connected to the negative post by extending transversely, thereby shortening the first adapter piece and the second adapter piece. Circuit loss and heat emission can be reduced by shortening the first adapter piece and the second adapter piece.

In some embodiments, the battery cell further includes a first end cap and a second end cap. A first opening is made on the first side face of the housing, and a second opening is made on the second side face of the housing. The first end cap is configured to seal the first opening, and the second end cap is configured to seal the second opening. With the two end caps disposed, the electrode assembly may be put into the housing along the direction perpendicular to the first direction first, and then the two openings are closed by the two end caps respectively, thereby improving the convenience of assembling.

In some embodiments, the battery cell further includes a first sleeve. The positive post includes a first inner post and a first outer post. The first sleeve is mounted on the first end cap. The first outer post is disposed on an outer side of the first end cap and connected to the first sleeve. The first adapter piece is connected to a first end of the first inner post. A second end of the first inner post passes through the first sleeve and is connected to the first sleeve on an outer side of the housing. This structure improves the convenience of assembling the battery cell, helps to fix and connect the first inner post and the first sleeve outside the housing, and improves the convenience of operation.

In some embodiments, the battery cell further includes a second sleeve. The negative post includes a second inner post and a second outer post. The second sleeve is mounted on the second end cap. The second outer post is disposed on an outer side of the second end cap and connected to the second sleeve. The second adapter piece is connected to a second end of the second inner post. The second end of the second inner post passes through the second sleeve and is connected to the second sleeve on an outer side of the housing. This structure improves the convenience of assembling the battery cell, helps to fix and connect the second inner post and the second sleeve outside the housing, and improves the convenience of operation.

In some embodiments, the first adapter piece includes a first connecting portion extending in a direction perpendicular to the first direction, the first connecting portion is connected to the first positive tab and the second positive tab, and an end that is of the first connecting portion and that is close to the positive post is connected to the positive post. Alternatively, the first adapter piece includes a first connecting portion extending in a direction perpendicular to the first direction and a second connecting portion extending in a direction parallel to the first direction, the first connecting portion and the second connecting portion are connected to form an L shape, the first connecting portion is connected to the first positive tab and the second positive tab, and the second connecting portion is connected to the positive post. This structure helps to enhance stability of electrical connection between the first adapter piece and the positive post by increasing the contact area between the first adapter piece and the positive post.

In some embodiments, the second adapter piece includes a third connecting portion extending in a direction perpendicular to the first direction, the third connecting portion is connected to the first negative tab and the second negative tab, and an end that is of the third connecting portion and that is close to the negative post is connected to the negative post. Alternatively, the second adapter piece includes a third connecting portion extending in a direction perpendicular to the first direction and a fourth connecting portion extending in a direction parallel to the first direction, the third connecting portion and the fourth connecting portion are connected to form an L shape, the third connecting portion is connected to the first negative tab and the second negative tab, and the fourth connecting portion is connected to the negative post. This structure helps to enhance stability of electrical connection between the second adapter piece and the negative post by increasing the contact area between the second adapter piece and the negative post.

In some embodiments, the battery cell further includes a first insulation piece disposed in the housing. The first insulation piece is configured to electrically isolate the negative post from the housing. The first insulation piece disposed reduces the risk of a short circuit between the positive electrode and the negative electrode, and improves the safety of the battery cell in use.

In some embodiments, the first body portion further includes a first separator, the first body portion is formed by winding the first positive electrode plate, the first negative electrode plate, and the first separator together, and the first direction is parallel to a winding centerline of the first body portion; and/or, the second body portion further includes a second separator, the second body portion is formed by winding the second positive electrode plate, the second negative electrode plate, and the second separator together, and the first direction is parallel to a winding centerline of the second body portion.

In some embodiments, the housing is made of a metal material. In this way, a metal-to-metal direct contact structure is formed between the first positive electrode plate and the housing, and between the second positive electrode plate and the housing, thereby effectively improving the heat dissipation efficiency and reducing the temperature of the battery cell.

According to a second aspect, this application provides a battery, including the battery cell.

According to a third aspect, this application provides an electrical device, including the battery. The battery is configured to supply electrical energy to the electrical device.

According to a fourth aspect, this application provides a method for manufacturing a battery cell, including:
providing a housing, a first body portion, and a second body portion, where the first body portion includes a first positive electrode plate and a first negative electrode plate, and the second body portion includes a second positive electrode plate and a second negative electrode plate;
disposing both the first body portion and the second body portion in the housing; and
arranging the first body portion and the second body portion at intervals along a first direction, the first body portion and the second body portion are both jelly-roll structures, and the first direction is the winding centerline of the first body portion and the second body portion, the first side face and the second side face are parallel to the first direction, where an end of the first positive electrode plate, which is oriented away from the second body portion along the first direction, contacts a first inner surface of the housing, and an end of the first negative electrode plate, which is oriented away from the second body portion along the first direction, is insulated from the first inner surface of the housing; and/or, an end of the second positive electrode plate, which is oriented away from the first body portion along the first direction, contacts a second inner surface of the housing, an end of the second negative electrode plate, which is oriented away from the first body portion along the first direction, is insulated from the second inner surface of the housing, and the first inner surface is disposed opposite to the second inner surface.

The battery and the electrical device according to this application each include the battery cell according to embodiments of this application. Therefore, both the battery and the electrical device possess the advantages of fast heat dissipation and low temperature, thereby helping to improve the safety performance and increase the lifespan. The method for manufacturing a battery cell according to this application also possess the foregoing advantages, details of which are omitted here.

The foregoing description is merely an overview of the technical solutions of this application. The following describes specific embodiments of this application illustratively to enable a clearer understanding of the technical solutions of this application, enable implementation of the technical solutions based on the content of the specification, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of an electrical device according to some embodiments of this application;
FIG. 2 is a schematic structural diagram of a battery according to some embodiments of this application;
FIG. 3 is a three-dimensional diagram of a battery cell according to some embodiments of this application;
FIG. 4 is a front view of a battery cell according to some embodiments of this application;
FIG. 5 is a top view of a battery cell according to some embodiments of this application;
FIG. 6 is a left view of a battery cell according to some embodiments of this application;
FIG. 7 is a sectional view of sectioning along a line A-A shown in FIG. 4 according to some embodiments of this application;
FIG. 8 is a close-up view of a part P1 shown in FIG. 7 according to some embodiments of this application;
FIG. 9 is a close-up view of a part P2 shown in FIG. 7 according to some embodiments of this application;
FIG. 10 is a close-up view of a part P3 shown in FIG. 7 according to some embodiments of this application;
FIG. 11 is a sectional view of sectioning along a line B-B shown in FIG. 4 according to some embodiments of this application;
FIG. 12 is a front view of a bracket in a battery cell according to some embodiments of this application;
FIG. 13 is a top view of a bracket in a battery cell according to some embodiments of this application;
FIG. 14 is a left view of a bracket in a battery cell according to some embodiments of this application;
FIG. 15 is a sectional view of sectioning along a line C-C shown in FIG. 5 according to some embodiments of this application;
FIG. 16 is a close-up view of a part P4 shown in FIG. 15 according to some embodiments of this application;
FIG. 17 is a schematic structural diagram of connection between a negative post and a second adapter piece according to some embodiments of this application;
FIG. 18 is a sectional view of sectioning along a line C-C shown in FIG. 5 according to other embodiments of this application;
FIG. 19 is a close-up view of a part P5 shown in FIG. 18 according to some embodiments of this application; and
FIG. 20 is a schematic structural diagram of connection between a negative post and a second adapter piece according to other embodiments of this application.

The drawings are not drawn to scale.

### Reference numerals:

1000. vehicle; 100. battery; 200. controller; 300. motor; 101. first cover body; 102. second cover body; 10a. shell; 20. battery cell; 1. housing; 1a. first end cap; 1b. second end cap; 2. first electrode assembly; 21. first body portion; 211. first positive electrode plate; 211a. first current collector; 211b. first active material layer; 212. first negative electrode plate; 212a. third current collector; 212b. third active material layer; 22. first positive tab; 23. first negative tab; 3. second electrode assembly; 31. second body portion; 311. second positive electrode plate; 311a. second current collector; 311b. second active material layer; 312. second negative electrode plate; 312a. fourth current collector; 312b. fourth active material layer; 32. second positive tab; 33. second negative tab; 4. bracket; 41. first support portion; 42. second support portion; 43. third support portion; 5. first adapter piece; 51. first connecting portion; 52. second connecting portion; 6. second adapter piece; 61. third connecting portion; 62. fourth connecting portion; 7a. first sleeve; 7. positive post; 71. first inner post; 72. first outer post; 8a. second sleeve; 8. negative post; 81. second inner post; 82. second outer post; 9. first insulation piece; 10. second insulation piece.

### DETAILED DESCRIPTION OF EMBODIMENTS

Embodiments of the technical solutions of this application are described in detail below with reference to the drawings. The following embodiments are merely intended to describe the technical solutions of this application more clearly, and serve merely as examples but without hereby limiting the protection scope of this application.

Unless otherwise defined, all technical and scientific terms used herein have the same meanings as commonly understood by a person skilled in the technical field of this application. The terms used herein are merely intended to describe specific embodiments but not intended to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In addition, the term "perpendicular" does not means exact perpendicularity, but means perpendicularity falling within an error tolerance range. "Parallel" does not mean exact parallelism, but means parallelism falling within an error tolerance range.

Reference to "embodiment" herein means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of the embodiments of this application, unless otherwise expressly specified, the term "a plurality of" means two or more. Similarly, unless otherwise expressly defined, "a plurality of groups" means two or more groups, and "a plurality of pieces" means two or more pieces.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally connected; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps expanding with the widening of the fields to which the power batteries are applicable.

The inventor of this application has noticed that some heat is generated inside a battery during charge-and-discharge cycles. When the heat accumulates a lot, an electrolytic solution evaporates and gradually dries up. Consequently, the charging efficiency decreases, electrode plates are deformed, an internal resistance increases, oxidation of mechanical parts are accelerated, and the electrode plate or separator is burned out, ending up with a reduced battery capacity and a shortened lifespan.

To overcome a series of adverse effects caused by battery heating, some countermeasures of lowering temperatures are employed in the related art. For example, a liquid cooling system is disposed inside the battery. A liquid in the liquid cooling system cools the battery and reduces the temperature. However, such a temperature lowering method involves a special-purpose liquid cooling system disposed inside the battery. An accommodation space needs to be reserved for the liquid cooling system inside the battery, thereby increasing the size of the battery. Consequently, the number of batteries that can be placed in the limited space of the electrical device decreases, and the electrical energy available from a battery system also decreases, thereby deteriorating user experience.

Through deeper research, the inventor finds that the heat transfer efficiency of two objects in direct contact with each other is much higher than that of the same objects not in direct contact. Therefore, a battery cell may be made in direct contact with the housing to improve heat dissipation capabilities of the battery cell. Compared with the cooling method that arranges a liquid cooling system inside the battery, the heat dissipation method by direct contact reduces the size of the battery greatly, helps to increase the total number of batteries accommodated in a limited space, and in turn, increases the total capacity of the battery system and improves the power performance.

To increase the area of direct contact between the battery cell and the housing, the inventor has carried out research on the structure of an existing battery cell, and finds that, in a structure of a currently available battery cell, a positive post and a negative post are usually arranged on the same top cover, and extension directions of the positive post and the negative post are usually the same as an protruding direction of a tab inside the battery cell. As limited by this structure, the connection between a positive electrode and a negative electrode of the battery cell has to be implemented at the same end of the battery cell. For example, the positive electrode and the negative electrode of the battery cell are connected at the top of the battery cell. Consequently, only the bottom of the entire battery cell can contact the housing outside the battery cell, resulting in poor heat dissipation of the battery cell.

Based on the above research, the inventor holds that the area of direct contact between the battery cell and the housing can be increased by changing the structure of the battery cell, so as to help the battery cell to dissipate heat quickly, effectively reduce the heat accumulated inside the battery cell, avoid accelerated aging of the battery cell, prevent accumulated heat from causing thermal runaway of the battery cell in extreme cases, and effectively increase the lifespan of the battery.

For this purpose, the inventor discloses a battery cell with an improved structure. In an embodiment of a battery cell according to this application, both the top and the bottom of the battery cell can be in direct contact with the housing, thereby effectively improving heat transfer efficiency, improving heat dissipation capabilities of the battery cell, preventing heat from accumulating inside the battery cell, and avoiding an adverse effect so caused to the battery life.

The battery cell disclosed in this embodiment of this application is applicable to, but without being limited to, electrical devices such as a vehicle, watercraft, or aircraft. A power supply system of the electrical devices may contain the battery cell, the battery and the like disclosed in this application to help accelerate heat dissipation of the battery cell, prevent overtemperature of the battery cell, and effectively increase the lifespan of the battery.

An embodiment of this application provides an electrical device that uses a battery as a power supply. The battery is configured to supply electrical energy to the electrical device. The electrical device may be, but without being limited to, a mobile phone, a portable device, a notebook computer, an electric power cart, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, or an electric planer.

For ease of description in the following embodiments, a vehicle 1000 is used as an example of the electrical device disclosed in some embodiments of this application.

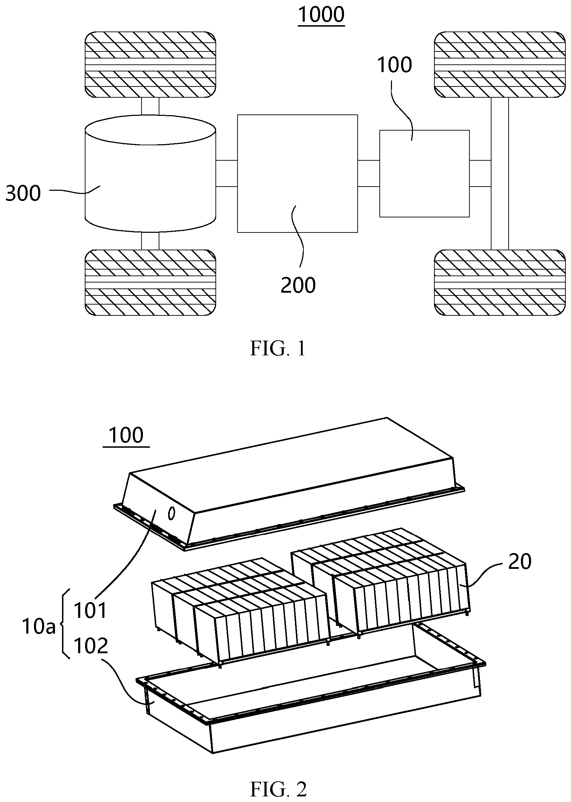

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The battery 100 is configured to supply electrical energy to the motor 300 and other components in the vehicle. The controller 200 is configured to control the motor 300 to work, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide driving power for the vehicle 1000 in place of or partly in place of oil or natural gas.

Referring to FIG. 2, FIG. 2 is an exploded view of a battery 100 according to some embodiments of this application. The battery 100 includes a shell 10a and a battery cell 20. The battery cell 20 is accommodated in the shell 10a. The shell 10a is configured to provide an accommodation space for the battery cell 20. The structure of the shell 10a may be diversified. In some embodiments, the shell 10a may include a first cover body 101 and a second cover body 102. The first cover body 101 and the second cover body 102 fit each other. The first cover body 101 and the second cover body 102 together define an accommodation space configured to accommodate the battery cell 20. The second cover body 102 may be a hollowed-out structure that is opened at one end. The first cover body 101 may be a plate-like structure. The first cover body 101 fits on an opening of the second cover body 102 so that the first cover body 101 and the second cover body 102 together define the accommodation space. Alternatively, both the first cover body 101 and the second cover body 102 may be hollowed-out structures, each being opened at one side. The opening of the first cover body 101 fits the opening of the second cover body 102. Definitely, the shell 10a formed by the first cover body 101 and the second cover body 102 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the shell 10a. Alternatively, the plurality of battery cells 20 may be connected in series, parallel, or series-and-parallel pattern to form a battery 100 that is in the form of a battery module. A plurality of battery modules are then connected in series, parallel, or series-and-parallel pattern to form a whole for being accommodated in the shell 10a. The battery 100 may further include other structures. For example, the battery 100 may further include a busbar component. The busbar component is configured to implement electrical connection between the plurality of battery cells 20.

The battery cell 20 is a minimum unit for making up a battery. The battery cells 20 include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in a cylindrical shape, a flat shape, a cuboidal shape, or other shapes, without being limited in embodiments of this application. Depending on the form of packaging, the battery cell is typically classed into three types: cylindrical cell, prismatic cell, and pouch-type cell, without being limited in embodiments of this application.

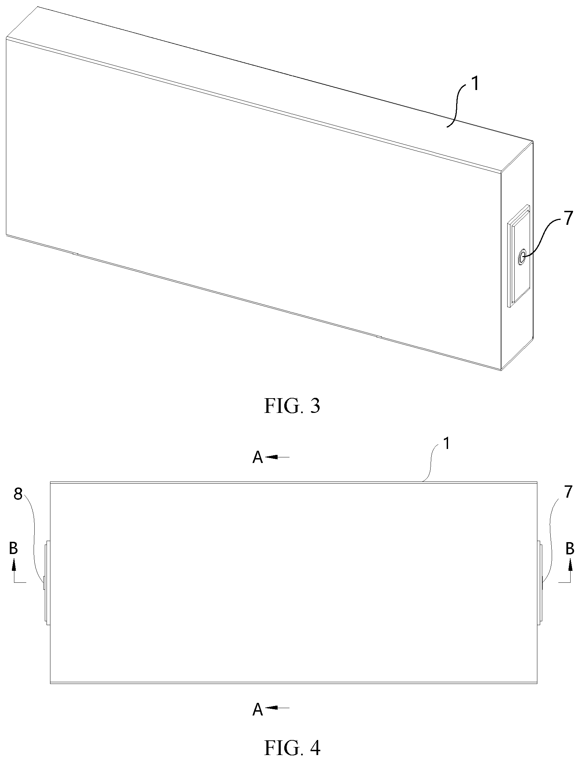

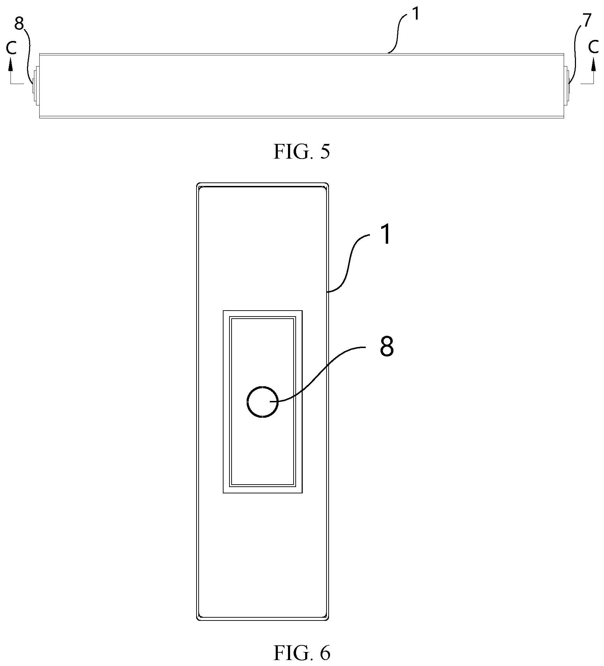

Refer to FIG. 3 to FIG. 6, which are a three-dimensional view, front view, top view, and left view, respectively, of a battery cell 20 according to some embodiments of this application. In some embodiments of this application, the battery cell 20 includes a housing 1 and an electrode assembly. The electrode assembly is disposed inside the housing 1.

The housing 1 is a component configured to provide an accommodation space for accommodating the electrode assembly, an electrolytic solution, and other components. The housing 1 includes an accommodation body with an opening, and an end cap configured to close the opening. The accommodation body and the end cap may be stand-alone components. An opening is made on the accommodation body. At the opening, the end cap fits the opening to form an internal environment of the battery cell 20. Without constituting any limitation, the end cap and the accommodation body may be integrated instead. Specifically, the end cap and the accommodation body may form a common connection interface first before other components are put into the housing. When the accommodation body needs to be sealed, the end cap is made to fit the accommodation body so that the accommodation body and the end cap are sealed in one piece.

The accommodation body is a component configured to fit with the end cap to form an internal environment of the battery cell 20. The end cap is a component that fits the opening of the accommodation body to isolate the internal environment of the battery cell 20 from the external environment. Without constituting any limitation, the shape of the end cap may be adapted to the shape of the accommodation body to fit with the accommodation body. Optionally, the end cap may be made of a material that is appropriately hard and strong, so that the end cap is not prone to deform under an extrusion force or expansion force. In this way, the battery cell 20 achieves higher structural strength and higher safety performance.

In some embodiments, the end cap may be equipped with a pressure relief mechanism configured to release an internal pressure when the internal pressure or temperature of the battery cell 20 reaches a threshold.

The housing 1 may be in various shapes and sizes, such as a cuboid, cylinder, or hexagonal prism. Specifically, the shape of the housing 1 may be determined depending on the specific shape and size of the electrode assembly. The material of the housing 1 may be a metal material such as copper, iron, aluminum, stainless steel, or aluminum alloy, or may be a non-metallic material such as plastic.

The electrode assembly is a component that reacts electrochemically in the battery cell 20. In some embodiments of this application, the electrode assembly includes a first electrode assembly 2 and a second electrode assembly 3. The first electrode assembly 2 includes a first body portion 21. The first body portion 21 is disposed in the housing 1. The first body portion 21 includes a first positive electrode plate 211 and a first negative electrode plate 212. The second electrode assembly includes a second body portion 31. The second body portion 31 is disposed in the housing 1. The second body portion 31 includes a second positive electrode plate 311 and a second negative electrode plate 312.

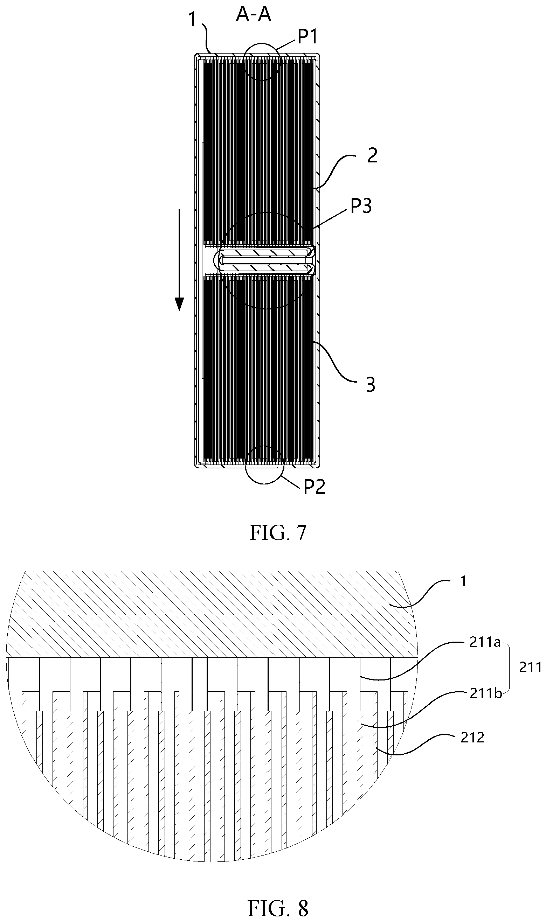

Referring to FIG. 7 to FIG. 9, the first body portion 21 and the second body portion 31 are arranged at intervals along a first direction. An end of the first positive electrode plate 211, which is oriented away from the second body portion 31 along the first direction, protrudes beyond the first body portion 21 and contacts a first inner surface of the housing 1, and the first negative electrode plate 212 is insulated from the first inner surface of the housing 1; and/or, an end of the second positive electrode plate 311, which is oriented away from the first body portion 21 along the first direction, protrudes beyond the second body portion 31 and contacts a second inner surface of the housing 1, the second negative electrode plate 312 is insulated from the second inner surface of the housing 1, and the first inner surface is disposed opposite to the second inner surface.

In the battery cell according to some embodiments of this application, the electrode assembly includes a first body portion 21 and a second body portion 31 that are arranged at intervals along the first direction. The end of the first positive electrode plate 211 of the first body portion 21, which is oriented away from the second body portion 31 along the first direction, protrudes beyond the first body portion 21 and directly contacts the first inner surface of the housing 1, and the end of the second positive electrode plate 311 of the second body portion 31, which is oriented away from the first body portion 21 along the first direction, protrudes beyond the second body portion 31 and directly contacts the second inner surface of the housing 1. That is, both ends of an electrode assembly may be in direct contact with the housing 1, thereby increasing the area of direct contact between the housing 1 and the entire battery cell formed of the first electrode assembly 2 and the second electrode assembly 3. In this way, the heat generated inside the battery cell can be more quickly dissipated through the direct contact with the housing 1, thereby increasing heat dissipation capabilities of the battery cell, preventing the heat from accumulating in the housing 1 to cause overtemperature of the battery, and effectively increasing the lifespan of the battery.

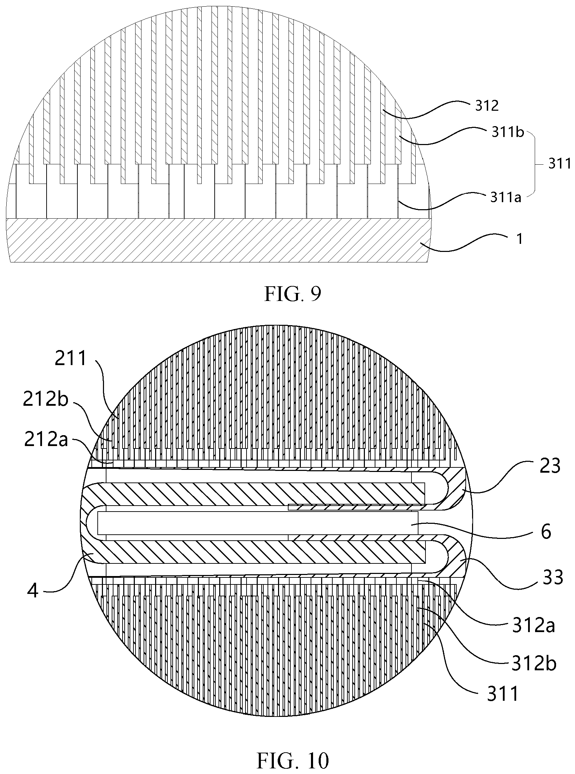

In the embodiment shown in FIG. 7, an up-down direction indicated by the arrow in FIG. 7 is the first direction, and the first electrode assembly 2 is disposed above the second electrode assembly 3. As shown in FIG. 8, the first electrode assembly 2 includes a first body portion 21. The length of the first positive electrode plate 211 in the first body portion 21 is greater than the length of the first negative electrode plate 212. An upper end of the first positive electrode plate 211 protrudes from the top of the first body portion 21, so that the upper end of the first positive electrode plate 211 is in direct contact with an upper inner surface of the housing 1. As shown in FIG. 9, the length of the second positive electrode plate 311 in the second body portion 31 is greater than the length of the second negative electrode plate 312. A lower end of the second positive electrode plate 311 protrudes from the top of the second body portion 31, so that the lower end of the second positive electrode plate 311 is in direct contact with a lower inner surface of the housing 1. Therefore, the heat transfer efficiency is relatively high between the first positive electrode plate 211 and the housing 1, and between the second positive electrode plate 311 and the housing 1. The heat generated inside the electrode assembly can be dissipated in time to lower the temperature of the battery cell and improve the lifespan and safety performance of the battery cell.

In some embodiments, the first positive electrode plate 211 includes a first current collector 211a and a first active material layer 211b formed on the first current collector 211a. An end of the first current collector 211a, which is oriented away from the second body portion 31 along the first direction, protrudes beyond the first active material layer 211b and contacts the first inner surface of the housing 1. The second positive electrode plate 311 includes a second current collector 311a and a second active material layer 311b formed on the second current collector 311a. An end of the second current collector 311a, which is oriented away from the first body portion 21 along the first direction, protrudes beyond the second active material layer 311b and contacts the second inner surface of the housing 1.

The first current collector 211a collects the current generated by the first active material layer 211b, so as to form a larger current to be output. The first current collector 211a, as a carrier of current collected, is a component that is prone to generate heat. Therefore, the first current collector 211a is set to protrude toward the housing 1 against the first body portion 21 to facilitate direct contact between the first current collector 211a and the housing 1, thereby effectively improving heat transfer efficiency and helping to rapidly reduce the temperature of the battery cell 20. In addition, in order to achieve electrical conductivity, the first current collector 211a is usually a metal foil such as an aluminum foil. The housing 1 made of a metal material can implement metal-to-metal direct contact to further improve the heat transfer efficiency.

The second current collector 311a collects the current generated by the second active material layer 311b, so as to form a larger current to be output. The second current collector 311a, as a carrier of current collected, is a component that is prone to generate heat. Therefore, the second current collector 311a is set to protrude toward the housing 1 against the second body portion 31 to facilitate direct contact between the second current collector 311a and the housing 1, thereby effectively improving heat transfer efficiency and helping to rapidly reduce the temperature of the battery cell 20. In addition, in order to achieve electrical conductivity, the second current collector 311a is usually a metal foil such as an aluminum foil. The housing 1 made of a metal material can implement metal-to-metal direct contact to further improve the heat transfer efficiency.

As shown in FIG. 8, the top of the first current collector 211a slightly extends beyond the top of the first active material layer 211b. The top of the first current collector 211a includes a part uncoated with the first active material layer 211b. The end of the uncoated part is in direct contact with the inner surface of the housing 1. In this way, the heat generated by the first current collector 211a during current transfer is dissipated out of the housing 1 in time by means of the heat transfer effect of the housing 1, thereby avoiding overtemperature of the battery cell 20, and avoiding an adverse effect thereby caused to the lifespan and safety of the battery cell 20. The first negative electrode plate 212 includes a third current collector 212a and a third active material layer 212b formed on the third current collector 212a. The top of the third current collector 212a may be flush with the third active material layer 212b, or the top of the third current collector 212a slightly extends beyond the third active material layer 212b, but both the third current collector 212a and the third active material layer 212b keep insulated from the housing 1.

As shown in FIG. 9, the top of the second current collector 311a slightly extends beyond the top of the second active material layer 311b. The top of the second current collector 311a includes a part uncoated with the second active material layer 311b. The end of the uncoated part is in direct contact with the inner surface of the housing 1. In this way, the heat generated by the second current collector 311a during current transfer is dissipated out of the housing 1 in time by means of the heat transfer effect of the housing 1, thereby avoiding overtemperature of the battery cell 20, and avoiding an adverse effect thereby caused to the lifespan and safety of the battery cell 20. The second negative electrode plate 312 includes a fourth current collector 312a and a fourth active material layer 312b formed on the fourth current collector 312a. The top of the fourth current collector 312a may be flush with the fourth active material layer 312b, or the top of the fourth current collector 312a slightly extends beyond the fourth active material layer 312b, but both the fourth current collector 312a and the fourth active material layer 312b keep insulated from the housing 1.

In some embodiments, an end of the first negative electrode plate 212, which is oriented away from the second body portion 31 along the first direction, is at a first preset distance from the first inner surface of the housing 1. An end of the second negative electrode plate 312, which is oriented away from the first body portion 21 along the first direction, is at a second preset distance from the second inner surface of the housing 1. In this way, the first negative electrode plate 212 keeps insulated from the housing 1, and the second negative electrode plate 312 keeps insulated from the housing 1, thereby preventing a short circuit caused by electrical conduction between the first positive electrode plate 211 and the first negative electrode plate 212 in a case that the first positive electrode plate 211 is in contact with the housing 1, or by electrical conduction between the second positive electrode plate 311 and the second negative electrode plate 312 in a case that the second positive electrode plate 311 is in contact with the housing 1. The short circuit impairs the safety of the battery cell 20, and may result in functional failure of the battery.

In other embodiments, in order to keep the first negative electrode plate 212 insulated from the housing 1 and keep the second negative electrode plate 312 insulated from and the housing 1, other insulation methods may be employed. For example, an insulation piece is disposed between the first negative electrode plate 212 and the housing 1 to electrically isolate the first negative electrode plate 212 from the housing 1; or, an insulation piece is disposed between the second negative electrode plate 312 and the housing 1 to electrically isolate the second negative electrode plate 312 from the housing 1.

In some embodiments, the first electrode assembly 2 further includes a first positive tab 22 and a first negative tab 23 that extend from the first body portion 21, and the second electrode assembly 3 further includes a second positive tab 32 and a second negative tab 33 that extend from the second body portion 31. The first positive tab 22 is connected to the first positive electrode plate 211. The first negative tab 23 is connected to the first negative electrode plate 212. The second positive tab 32 is connected to the second positive electrode plate 311. The second negative tab 33 is connected to the second negative electrode plate 312. The first positive tab 22 and the first negative tab 23 are disposed at an end of the first body portion 21, where the end is close to the second body portion 31 along the first direction. The second positive tab 32 and the second negative tab 33 are disposed at an end of the second body portion 31, where the end is close to the first body portion 21 along the first direction.

In some of the above embodiments, the first positive tab 22, the first negative tab 23, the second positive tab 32, and the second negative tab 33 are all located between the first body portion 21 and the second body portion 31, thereby achieving the following two effects. As a first effect, both the first positive tab 22 and the first negative tab 23 are disposed at an end of the first body portion 21, where the end is oriented away from the housing 1 along the first direction. This prevents the existence of the first positive tab 22 and the first negative tab 23 from affecting the direct contact between the end of the first positive electrode plate 211 and the first inner surface of the housing 1, where the end is oriented away from the second body portion 31 along the first direction. As a second effect, both the second positive tab 32 and the second negative tab 33 are disposed at an end of the second body portion 31, where the end is oriented away from the housing 1 along the first direction. This prevents the existence of the second positive tab 32 and the second negative tab 33 from affecting the direct contact between the end of the second positive electrode plate 311 and the second inner surface of the housing 1, where the end is oriented away from the first body portion 21 along the first direction.

The first positive tab 22, the first negative tab 23, the second positive tab 32, and the second negative tab 33 are all disposed in the space between the first body portion 21 and the second body portion 31, thereby helping to increase the area of direct contact between the electrode assembly and the housing 1 and enhancing the effect of heat transfer between the electrode assembly and the housing 1. Moreover, this can also shorten the distance between the first positive tab 22 and the second positive tab 32 and the distance between the first negative tab 23 and the second negative tab 33, shorten the current transfer path, reduce energy consumption, reduce heat emission, and prevent overtemperature of the battery cell 20 from impairing the lifespan and safety of the battery cell in use.

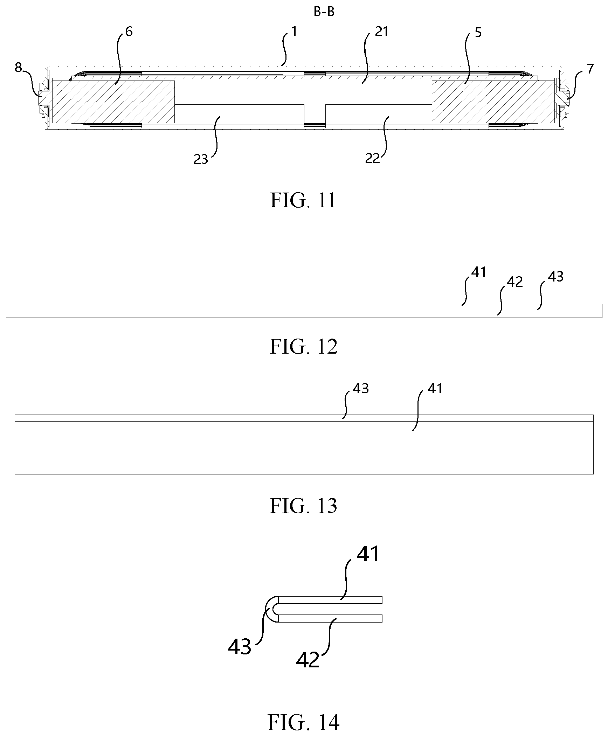

As shown in FIG. 10 and FIG. 11, the first positive tab 22 and the first negative tab 23 extend downward out of the bottom of the first body portion 21 separately. The second positive tab 32 and the second negative tab 33 extend upward out of the top of the second body portion 31 separately. The first positive tab 22, the first negative tab 23, the second positive tab 32, and the second negative tab 33 are all located in a clearance between the first body portion 21 and the second body portion 31. In this way, the direct contact between the first positive electrode plate 211 and the housing 1 can be implemented at the top of the first body portion 21, and the direct contact between the second positive electrode plate 311 and the housing 1 can be implemented at the bottom of the second body portion 31, thereby enhancing the heat transfer effect. Moreover, the distance between the first positive tab 22 and the second positive tab 32 as well as the distance between the first negative tab 23 and the second negative tab 33 are relatively short, thereby helping to reduce heat emission and fundamentally lowering the temperature of the battery cell 20.

In some embodiments, at an end close to the second body portion 31 along the first direction, the first positive electrode plate 211 in the first body portion 21 protrudes beyond the first body portion 21 to form the first positive tab 22. At an end close to the second body portion 31 along the first direction, the first negative electrode plate 212 in the first body portion 21 protrudes beyond the first body portion 21 to form the first negative tab 23. At an end close to the first body portion 21 along the first direction, the second positive electrode plate 311 in the second body portion 31 protrudes beyond the second body portion 31 to form the second positive tab 32. At an end close to the first body portion 21 along the first direction, the second negative electrode plate 312 in the second body portion 31 protrudes beyond the second body portion 31 to form the second negative tab 33.

As shown in FIG. 10 and FIG. 11, the first positive tab 22 extends from the first body portion 21 toward the second body portion 31 first, and then extends transversely along a direction perpendicular to the first direction, so as to form a U-shaped structure on which an opening is made. The second positive tab 32 extends from the second body portion 31 toward the first body portion 21 first, and then extends transversely along a direction perpendicular to the first direction, so as to form a U-shaped structure on which an opening is made. The first negative tab 23 and the second negative tab 33 may be formed in a way similar to the way of forming the first positive tab 22 and the second positive tab 32, details of which are omitted here.

In some embodiments, the battery cell 20 further includes a bracket 4. The bracket 4 is disposed between the first body portion 21 and the second body portion 31 to make the first positive electrode plate 211 keep in contact with the first inner surface of the housing 1, and to make the second positive electrode plate 311 keep in contact with the second inner surface of the housing 1.

The bracket 4 disposed can support the first body portion 21 and the second body portion 31, make the first positive electrode plate 211 keep in contact with the first inner surface of the housing 1, and make the second positive electrode plate 311 keep in contact with the second inner surface of the housing 1. In this way, it is prevented that, due to gravity, an external force, or other factors, the first positive electrode plate 211 is remote from the first inner surface of the housing 1, and the second positive electrode plate 311 is remote from the second inner surface of the housing 1. The remoteness impairs the heat transfer efficiency, reduces the heat dissipation speed, and results in overtemperature of the battery cell.

For example, in an application scenario where the first body portion 21 and the second body portion 31 are arranged vertically, the bracket 4 may support the first body portion 21 located above, so as to prevent the second body portion 31 from being squeezed by the gravity of the first body portion 21 and prevent the second body portion 31 from being crushed. Moreover, by supporting the first body portion 21, the bracket 4 further prevents the first positive electrode plate 211 in the first body portion 21 located above from failing to keep in contact with the first inner surface of the housing 1 due to remoteness from the housing 1. The failure to keep in contact impairs the heat transfer effect, reduces the heat dissipation speed of the first electrode assembly 2, results in overtemperature of the battery cell 20, and impairs the lifespan and safety of the battery cell.

In some embodiments, the first body portion 21 includes a first separator configured to keep the first positive electrode plate 211 insulated from the first negative electrode plate 212. The second body portion 31 includes a second separator configured to keep the second positive electrode plate 311 insulated from the second negative electrode plate 312. The bracket 4 serves as a support between the first separator and the second separator. The advantage of such an arrangement is that the bracket 4 is prevented from crushing the first positive electrode plate 211, the first negative electrode plate 212, the second positive electrode plate 311, and the second negative electrode plate 312, and the arrangement helps to protect the first positive electrode plate 211, the first negative electrode plate 212, the second positive electrode plate 311, and the second negative electrode plate 312 and increase the lifespan of the electrode plates.

To enable the bracket 4 to serve as a support between the first separator and the second separator, the first separator protrudes beyond the first body portion 21 at an end close to the second body portion 31 along the first direction. In this way, at the end close to the second body portion 31 along the first direction, the first separator can extend beyond the first positive electrode plate 211 and the first negative electrode plate 212. In this way, the first separator can contact the bracket 4, and the first separator keeps being supported by the bracket 4, thereby protecting the first positive electrode plate 211 and the first negative electrode plate 212 from being squeezed. The second separator protrudes beyond the second body portion 31 at an end close to the first body portion 21 along the first direction. In this way, at the end close to the first body portion 21 along the first direction, the second separator can extend beyond the second positive electrode plate 311 and the second negative electrode plate 312. In this way, the second separator can contact the bracket 4, and the second separator keeps being supported by the bracket 4, thereby protecting the second positive electrode plate 311 and the second negative electrode plate 312 from being squeezed.

It is hereby noted that, in order to form the first positive tab 22, at the end close to the second body portion 31 along the first direction, the first positive electrode plate 211 needs to protrude beyond the first body portion 21, that is, at the end close to the second body portion 31 along the first direction, the first positive electrode plate 211 needs to extend beyond the first negative electrode plate 212 and the first separator. In order to form the first negative tab 23, at the end close to the second body portion 31 along the first direction, the first negative electrode plate 212 needs to protrude beyond the first body portion 21, that is, at the end close to the second body portion 31 along the first direction, the first negative electrode plate 212 needs to extend beyond the first positive electrode plate 211 and the first separator. In order to enable the bracket 4 to support the first separator, at the end close to the second body portion 31 along the first direction, the first separator needs to protrude beyond the first body portion 21, that is, at the end close to the second body portion 31 along the first direction, the first separator needs to extend beyond the first positive electrode plate 211 and the first negative electrode plate 212. Such three arrangements tend to be misunderstood as contradicting each other, but they are not contradictory because the first body portion 21 possesses a preset area at an end face close to the second body portion 31. No matter whether the purpose is to form the first positive tab 22 or the first negative tab 23 or enable the bracket 4 to support the first separator, the corresponding arrangement can be implemented in a preset region, and different regions in the entire end face that is of the first body portion 21 and that is close to the second body portion 31 are not necessarily made into the same structure. Therefore, the corresponding purpose can be fulfilled by arrangement in different regions.

Similarly, it is hereby noted that, in order to form the second positive tab 32, at the end close to the first body portion 21 along the first direction, the second positive electrode plate 311 needs to protrude beyond the second body portion 31, that is, at the end close to the first body portion 21 along the first direction, the second positive electrode plate 311 needs to extend beyond the second negative electrode plate 312 and the first separator. In order to form the second negative tab 33, at the end close to the first body portion 21 along the first direction, the second negative electrode plate 312 needs to protrude beyond the second body portion 31, that is, at the end close to the first body portion 21 along the first direction, the second negative electrode plate 312 needs to extend beyond the second positive electrode plate 311 and the first separator. In order to enable the bracket 4 to support the second separator, at the end close to the first body portion 21 along the first direction, the second separator needs to protrude beyond the second body portion 31, that is, at the end close to the first body portion 21 along the first direction, the second separator needs to extend beyond the second positive electrode plate 311 and the second negative electrode plate 312. Such three arrangements tend to be misunderstood as contradicting each other, but they are not contradictory because the second body portion 31 possesses a preset area at an end face close to the first body portion 21. No matter whether the purpose is to form the second positive tab 32 or the second negative tab 33 or enable the bracket 4 to support the second separator, the corresponding arrangement can be implemented in a preset region, and different regions in the entire end face that is of the second body portion 31 and that is close to the first body portion 21 are not necessarily made into the same structure. Therefore, the corresponding purpose can be fulfilled by arrangement in different regions.

In some embodiments, the bracket 4 includes a first support portion 41, a second support portion 42, and a third support portion 43 connected between the first support portion 41 and the second support portion 42. The first support portion 41 is configured to serve as a support between the first body portion 21 and a first positive tab 22 and a support between the first body portion 21 and a first negative tab 23. The second support portion 42 is configured to serve as a support between the second body portion 31 and a second positive tab 32 and a support between the second body portion 31 and a second negative tab 33. The advantages of the bracket 4 with such a structure are: when the battery cell 20 is in a working state, no matter whether the first electrode assembly 2 or the second electrode assembly 3 is located above, the first electrode assembly 2 and the second electrode assembly 3 can be supported effectively, thereby facilitating installation and operation.

As shown in FIG. 12 to FIG. 14, a side view of the bracket 4 is U-shaped. Such a structure can support the first electrode assembly 2 and the second electrode assembly 3 through the first support portion 41 and the second support portion 42 respectively. The first support portion 41 may be inserted into an opening formed by bending the first positive tab 22 and the first negative tab 23 separately. The second support portion 42 may be inserted into an opening formed by bending the second positive tab 32 and the second negative tab 33 separately.

In some embodiments, the battery cell 20 further includes a first adapter piece 5, a second adapter piece 6, a positive post 7, and a negative post 8. The first positive tab 22 and the second positive tab 32 are both connected to the first adapter piece 5. The first adapter piece 5 is connected to the positive post 7. The first negative tab 23 and the second negative tab 33 are both connected to the second adapter piece 6. The second adapter piece 6 is connected to the negative post 8.

In some of the above embodiments, the first positive tab 22 and the second positive tab 32 are both connected to the first adapter piece 5. The first negative tab 23 and the second negative tab 33 are both connected to the second adapter piece 6. Therefore, the first electrode assembly 2 and the second electrode assembly 3 share an adapter piece, thereby reducing the number of components of the battery cell 20 and saving cost. In addition, the sharing of the adapter piece also simplifies the internal structural layout of the battery cell 20, saves space, and reduces the size of the battery cell 20.

As shown in FIG. 10 and FIG. 11, the first positive tab 22 may be arranged opposite to the second positive tab 32. The first negative tab 23 may be arranged opposite to the second negative tab 33, so as to facilitate arrangement of the first adapter piece 5 connected to the first positive tab 22 and the second positive tab 32 as well as the second adapter piece 6 connected to the first negative tab 23 and the second negative tab 33.

In some embodiments, the positive post 7 is mounted on a first side face of the housing 1, and the negative post 8 is mounted on a second side face of the housing 1. The first side face is disposed opposite to the second side face, and both the first side face and the second side face are parallel to the first direction.

The positive post 7 and the negative post 8 are disposed on the two side faces of the housing 1 with respect to the first direction respectively. In this way, the first positive tab 22 and the second positive tab 32 that are located between the first body portion 21 and the second body portion 31 can be conveniently connected to the positive post 7 by extending transversely, and the first negative tab 23 and the second negative tab 33 that are located between the first body portion 21 and the second body portion 31 can be conveniently connected to the negative post 8 by extending transversely, thereby shortening the first adapter piece 5 and the second adapter piece 6. Circuit loss and heat emission can be reduced by shortening the first adapter piece 5 and the second adapter piece 6.

In some embodiments, the battery cell includes a first end cap 1a and a second end cap 1b. A first opening is made on the first side face of the housing 1, and a second opening is made on the second side face of the housing 1. The first end cap 1a is configured to seal the first opening, and the second end cap 1b is configured to seal the second opening. The positive post 7 is mounted on the first end cap 1a, and the negative post 8 is mounted on the second end cap 1b.

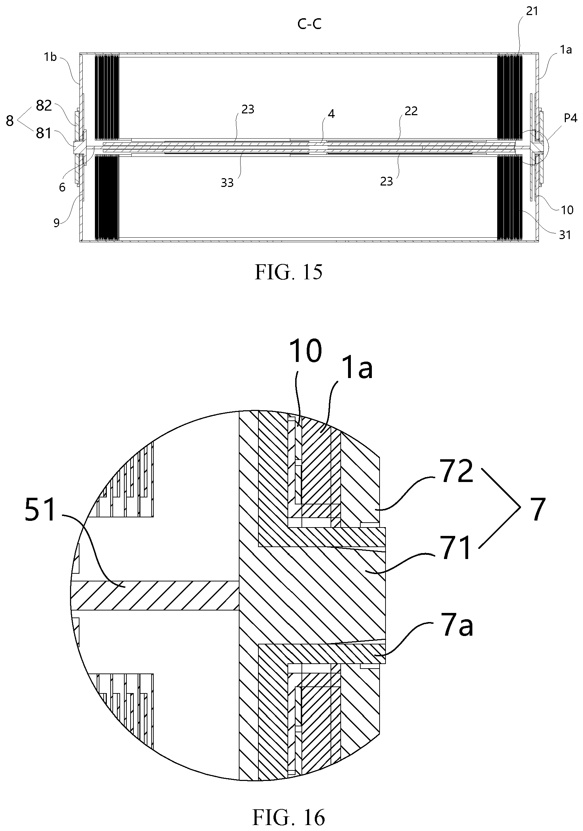

As shown in FIG. 15, FIG. 16, FIG. 18, and FIG. 19, the positive post 7 includes a first inner post 71 and a first outer post 72. The first sleeve 7a is mounted on the first end cap 1a. The first outer post 72 is disposed on an outer side of the first end cap 1a and connected to the first sleeve 7a. The first adapter piece 5 is connected to a first end of the first inner post 71. A second end of the first inner post 71 passes through the first sleeve 7a and is connected to the first sleeve 7a on an outer side of the housing 1. Compared with the inner side, the outer side of the housing 1 provides a larger operation space. Therefore, the first inner post 71 and the first sleeve 7a are fixed and connected on the outer side of the housing 1, thereby making the operation more convenient and helping to improve the assembling efficiency.

The positive post 7 containing the first inner post 71 and the first outer post 72 is disposed, the first sleeve 7a is disposed, and the first sleeve 7a is mounted on the first end cap 1a. During assembling of the battery cell, the first adapter piece 5 may be connected to the first end of the first inner post 71 first, and then the electrode assembly is put into the housing 1. Subsequently, during sealing of the first end cap 1a, the second end of the first inner post 71 is passed out of the housing 1 through the first sleeve 7a. After the first end cap 1a is fixed, the first inner post 71 is connected to the first sleeve 7a on the outer side of the housing 1. In this way, the first inner post 71 and the first outer post 72 are connected together through the first sleeve 7a to form the positive post 7.

The first sleeve 7a includes a first sleeve portion and a first limiting portion. A first through-hole is made on the first end cap 1a. The first sleeve portion is inserted into the first through-hole. The first limiting portion is connected to the first sleeve portion. The first limiting portion is located on the inner side of the first end cap 1a. The first limiting portion is larger than the first through-hole in size, so as to limit the position of the first sleeve portion and prevent the first sleeve portion from detaching from the first through-hole.

A second through-hole that runs through the first sleeve is made at the center of the first sleeve 7a. The first inner post 71 includes a first post portion and a second limiting portion. The first post portion is inserted into the second through-hole. The second limiting position is connected to the first post portion. The second limiting portion is located on the inner side of the first sleeve 7a. The second limiting portion is larger than the second through-hole in size. The second limiting portion is in contact with the first limiting portion, so as to limit the position of the first post portion and prevent the first post portion from detaching from the second through-hole. The first outer post 72 is configured to be electrically connected to a positive electrode of an electrical component.

The way of connecting the negative post 8 to the second end cap 1b may be the same as or different from the way of connecting the positive post 7 to the first end cap 1a. For example, a second sleeve 8a may be disposed between the negative post 8 and the second end cap 1b, or the second sleeve 8a may be omitted.

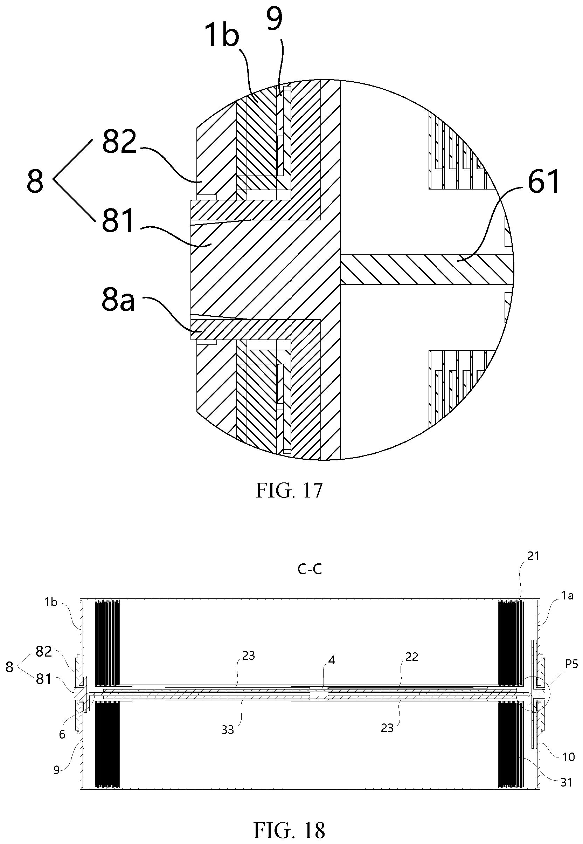

In the embodiments shown in FIG. 15 and FIG. 18, the second sleeve 8a is omitted between the negative post 8 and the second end cap 1b. The negative post 8 includes a second inner post 81 and a second outer post 82. The second outer post 82 is disposed on the outer side of the second end cap 1b. A first end of the second inner post 81 is located on the inner side of the second end cap 1b and connected to the second adapter piece 6. A second end of the second inner post 81 passes through the second end cap 1b and is connected to the second outer post 82.

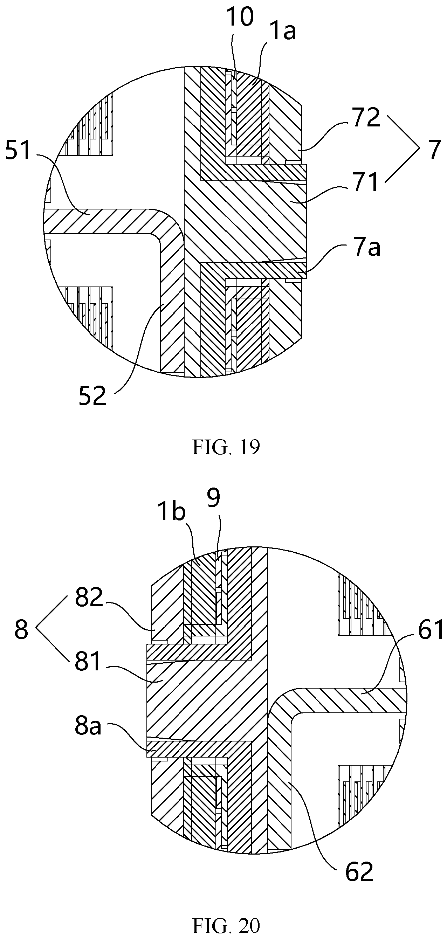

In the embodiments shown in FIG. 17 and FIG. 20, the second sleeve 8a is disposed between the negative post 8 and the second end cap 1b. The negative post 8 includes a second inner post 81 and a second outer post 82. The second sleeve 8a is mounted on the second end cap 1b. The second outer post 82 is disposed on an outer side of the second end cap 1b and connected to the second sleeve 8a. The second adapter piece 6 is connected to a second end of the second inner post 81. The second end of the second inner post 81 passes through the second sleeve 8a and is connected to the second sleeve 8a on an outer side of the housing 1. Compared with the inner side, the outer side of the housing 1 provides a larger operation space. Therefore, the second inner post 81 and the second sleeve 8a are fixed and connected on the outer side of the housing 1, thereby making the operation more convenient and helping to improve the assembling efficiency.

The negative post 8 containing the second inner post 81 and the second outer post 82 is disposed, the second sleeve 8a is disposed, and the second sleeve 8a is mounted on the second end cap 1b. During assembling of the battery cell, the second adapter piece 6 may be connected to the first end of the second inner post 81 first, and then the electrode assembly is put into the housing 1. Subsequently, during sealing of the second end cap 1b, the second end of the second inner post 81 is passed out of the housing 1 through the second sleeve 8a. After the second end cap 1b is fixed, the second inner post 81 is connected to the second sleeve 8a on the outer side of the housing 1. In this way, the second inner post 81 and the second outer post 82 are connected together through the second sleeve 8a to form the negative post 8.

The second sleeve 8a includes a second sleeve portion and a third limiting portion. A third through-hole is made on the second end cap 1b. The second sleeve portion is inserted into the third through-hole. The third limiting portion is connected to the second sleeve portion. The third limiting portion is located on the inner side of the second end cap 1b. The third limiting portion is larger than the third through-hole in size, so as to limit the position of the second sleeve portion and prevent the second sleeve portion from detaching from the third through-hole.

A fourth through-hole that runs through the second sleeve is made at the center of the second sleeve 8a. The second inner post 81 includes a first post portion and a fourth limiting portion. The first post portion is inserted into the fourth through-hole. The fourth limiting position is connected to the first post portion. The fourth limiting portion is located on the inner side of the second sleeve 8a. The fourth limiting portion is larger than the fourth through-hole in size. The fourth limiting portion is in contact with the third limiting portion, so as to limit the position of the first post portion and prevent the first post portion from detaching from the fourth through-hole. The second outer post 82 is configured to be electrically connected to a positive electrode of an electrical component.

In the embodiments shown in FIG. 15 and FIG. 18, a battery cell may be assembled according to the following steps: mounting the second inner post 81 and the second outer post 82 onto the second end cap 1b outside the housing 1 before the electrode assembly is put into the housing 1; connecting the second adapter piece 6 to the first negative tab 23 and the second negative tab 33, and then connecting the second adapter piece 6 to the second inner post 81; connecting the first adapter piece 5 to the first positive tab 22 and the second positive tab 32, and then connecting the first adapter piece 5 to the first inner post 71; subsequently, putting the whole of the second end cap 1b, the negative post 8, the second adapter piece 6, the electrode assembly, the first adapter piece 5, and the first inner post 71 into the housing 1; finally, sealing the first end cap 1a onto the second side face of the housing 1, where the first outer post 72 and the first sleeve 7a have been mounted onto the first end cap 1a, so that the second end of the first inner post 71 is passed out of the housing from the outer side of the housing 1. In this way, the first inner post 71 and the first sleeve 7a are connected by welding on the outer side of the housing 1 to complete the assembling.

In the embodiments shown in FIG. 17 and FIG. 20, a second sleeve 8a is disposed between the negative post 8 and the second end cap 1b. Therefore, the assembling may be performed with reference to the assembling method of the first end cap 1a described above, and the assembling steps include: connecting the first inner post 71 to the first adapter piece 5, connecting the second inner post 81 to the second adapter piece 6, and then putting the electrode assembly into the housing 1, sealing the first end cap 1a, connecting the first inner post 71 to the second sleeve 7a, sealing the second end cap 1b, and then connecting the second inner post 81 and the second sleeve 8a.

A plurality of structures of the first adapter piece 5 and the second adapter piece 6 are available for selection.

For example, in the embodiments shown in FIG. 15 and FIG. 16, the first adapter piece 5 includes a first connecting portion 51 extending in a direction perpendicular to the first direction. The first connecting portion 51 is connected to the first positive tab 22 and the second positive tab 32. An end of the first connecting portion 51, which is close to the positive post 7, is connected to the positive post 7.

In the embodiments shown in FIG. 18 and FIG. 19, the first adapter piece 5 includes a first connecting portion 51 extending in a direction perpendicular to the first direction and a second connecting portion 52 extending in a direction parallel to the first direction. The first connecting portion 51 and the second connecting portion 52 are connected to form an L shape. The first connecting portion 51 is connected to the first positive tab 22 and the second positive tab 32. The second connecting portion 52 is connected to the positive post 7. This structure enhances stability of connection between the first adapter piece 5 and the positive post 7 by increasing the contact area between the second connecting portion 52 and the positive post 7.

Similarly, in the embodiments shown in FIG. 15 and FIG. 17, the second adapter piece 6 includes a third connecting portion 61 extending in a direction perpendicular to the first direction. The third connecting portion 61 is connected to the first negative tab 23 and the second negative tab 33. An end of the third connecting portion 61, which is close to the negative post 8, is connected to the negative post 8.

In the embodiments shown in FIG. 18 and FIG. 20, the second adapter piece 6 includes a third connecting portion 61 extending in a direction perpendicular to the first direction and a fourth connecting portion 62 extending in a direction parallel to the first direction. The third connecting portion 61 and the fourth connecting portion 62 are connected to form an L shape. The third connecting portion 61 is connected to the first negative tab 23 and the second negative tab 33. The fourth connecting portion 62 is connected to the negative post 8. This structure enhances stability of connection between the second adapter piece 6 and the negative post 8 by increasing the contact area between the fourth connecting portion 62 and the negative post 8.

In some embodiments, the battery cell 20 further includes a first insulation piece 9 disposed in the housing 1. The first insulation piece 9 is configured to electrically isolate the negative post 8 from the housing 1.

In some embodiments of this application, the first negative electrode plate 212 in the first electrode assembly 2 keeps insulated from the housing 1, and the second negative electrode plate 312 in the second electrode assembly 3 also keeps insulated from the housing 1. However, an end of the first positive electrode plate 211 in the first electrode assembly 2 is in direct contact with the first inner surface of the housing 1, and an end of the second positive electrode plate 311 in the second electrode assembly 3 is in direct contact with the second inner surface of the housing 1. In addition, the first positive tab 22 in the first electrode assembly 2 and the second positive tab 32 in the second electrode assembly 3 are both connected to the positive post 7 through the first adapter piece 5. Therefore, the first insulation piece 9 capable of electrically isolating the negative post 8 from the housing 1 can prevent the negative post 8 from being electrically connected to the positive post 7 through the housing 1 to result in a short circuit. The short circuit impairs the safety of the battery cell, and may lead to functional failure of the battery cell.

In the embodiment shown in FIG. 15 or FIG. 17, the battery cell 20 further includes a second insulation piece 10 disposed in the housing 1. The second insulation piece 10 is configured to electrically isolate the positive post 7 from the housing 1.

The second insulation piece 10 is omissible in other embodiments in view of the following factors: one end of the first positive electrode plate 211 in the first electrode assembly 2 is in direct contact with the first inner surface of the housing 1, one end of the second positive electrode plate 311 in the second electrode assembly 3 is in direct contact with the second inner surface of the housing 1, and the first positive tab 22 in the first electrode assembly 2 and the second positive tab 32 in the second electrode assembly 3 are both connected to the positive post 7 by the first adapter piece 5, that is, electrical connection is implemented between the positive post 7 and the housing 1 by the first adapter piece 5, the first positive tab 22, and the first positive electrode plate 211, and by the first adapter piece 5, the second positive tab 32, and the second positive electrode plate 311.

In some embodiments, the first body portion 21 further includes a first separator, the first body portion 21 is formed by winding the first positive electrode plate 211, the first negative electrode plate 212, and the first separator together, and the first direction is parallel to a winding centerline of the first body portion 21; and/or, the second body portion 31 further includes a second separator, the second body portion 31 is formed by winding the second positive electrode plate 311, the second negative electrode plate 312, and the second separator together, and the first direction is parallel to a winding centerline of the second body portion 31. According to this application, the first body portion 21 and the second body portion 31 are both jelly-roll structures. In the case of a jelly-roll structure, the first direction is the winding centerline of the first body portion 21 and the second body portion 31.

In other embodiments, the first body portion 21 and the second body portion 31 may be manufactured by stacking the positive electrode plate, the negative electrode plate, and the separator in sequence. In the case of the stacked structure, a direction in which the positive and negative electrode plates protrude from two ends may be used as the first direction.

In some embodiments of this application, the housing 1 is made of a metal material. Both the first positive electrode plate 211 and the second positive electrode plate 311 are made of a metal material. Therefore, metal-to-metal direct contact is implemented between the first positive electrode plate 211 and the housing 1, and between the second positive electrode plate 311 and the housing 1, thereby greatly improving the heat transfer efficiency and effectively reducing the temperature of the battery cell.

This application further provides a battery, including the battery cell.

This application further provides an electrical device, including the battery. The battery is configured to supply electrical energy to the electrical device.

This application further provides a method for manufacturing a battery cell, including:
providing a housing 1, a first body portion 21, and a second body portion 31, where the first body portion 21 includes a first positive electrode plate 211 and a first negative electrode plate 212, and the second body portion 31 includes a second positive electrode plate 311 and a second negative electrode plate 312;
disposing both the first body portion 21 and the second body portion 31 in the housing 1; and
arranging the first body portion 21 and the second body portion 31 at intervals along a first direction, where an end of the first positive electrode plate 211, which is oriented away from the second body portion 31 along the first direction, contacts a first inner surface of the housing 1, and an end of the first negative electrode plate 212, which is oriented away from the second body portion 31 along the first direction, is insulated from the first inner surface of the housing 1; and/or, an end of the second positive electrode plate 311, which is oriented away from the first body portion 21 along the first direction, contacts a second inner surface of the housing 1, an end of the second negative electrode plate 312, which is oriented away from the first body portion 21 along the first direction, is insulated from the second inner surface of the housing 1, and the first inner surface is disposed opposite to the second inner surface.

The beneficial effects of each embodiment of the battery cell disclosed in this application are also applicable to the battery, the electrical device, and the method for manufacturing a battery cell, and are not repeated here.

The following describes the structures of battery cells according to some embodiments of this application with reference to FIG. 3 to FIG. 17.

Refer to FIG. 3 to FIG. 6, which are a three-dimensional view, front view, top view, and left view, respectively, of a battery cell 20. The battery cell 20 includes a housing 1. The housing 1 includes an accommodation body, a first end cap, and a second end cap. A first opening is made at a left end of the accommodation body, and a second opening is made at a right end. The first end cap is configured to close the first opening, and the second end cap is configured to close the second opening. A negative post 8 is mounted on the first end cap, and a positive post 7 is mounted on the second end cap.

As shown in FIG. 7, a first electrode assembly 2 and a second electrode assembly 3 are disposed inside the housing 1. A first direction is a vertical direction, and the first electrode assembly 2 is disposed above the second electrode assembly 3. The first electrode assembly 2 and the second electrode assembly 3 are identical in structure, and are symmetric to each other vertically with respect to a midline between the first electrode assembly 2 and the second electrode assembly 3.

The first electrode assembly 2 includes a first body portion 21, and a first positive tab 22 and a first negative tab 23 that extend downward from the first body portion 21. The second electrode assembly 3 includes a second body portion 31, and a second positive tab 32 and a second negative tab 33 that extend upward from the second body portion 31. The first positive tab 22 and the second positive tab 32 are oppositely disposed at an end that is of the housing 1 and that is close to the second end cap. The first negative tab 23 and the second negative tab 33 are oppositely disposed at an end that is of the housing 1 and that is close to the first end cap.

In the embodiment shown in FIG. 7, the first positive tab 22 and the second positive tab 32 are connected to the first adapter piece 5 separately. The first adapter piece 5 is connected to the positive post 7. The first negative tab 23 and the second negative tab 33 are connected to the second adapter piece 6 separately. The second adapter piece 6 is connected to the negative post 8.

The first positive tab 22, the first negative tab 23, the second positive tab 32, and the second negative tab 33 are all disposed between the first body portion 21 and the second body portion 31. The positive post 7 and the negative post 8 are disposed on the right side and the left side of the housing 1 respectively. Therefore, the first adapter piece 5 can be extended to the positive post 7 basically horizontally, and the second adapter piece 6 can be extended to the negative post 8 basically horizontally, thereby effectively shortening the first adapter piece 5 and the second adapter piece 6, reducing heat emission, and lowering the temperature of the battery cell 20.

A first insulation piece 9 and a second insulation piece 10 are further disposed on the inner side of the housing 1. The first insulation piece 9 is configured to electrically isolate the negative post 8 from the housing 1, and the second insulation piece 10 is configured to electrically isolate the positive post 7 from the housing 1. In some embodiments, the second insulation piece 10 is omissible. The first insulation piece 9 and the second insulation piece 10 may be made of a plastic material. The positive post 7 may be connected to the housing 1, and the negative post 8 may be connected to the housing 1, by riveting. A sealing ring may be disposed at the junction. The sealing ring may be made of a fluororubber material.

As shown in FIG. 8, the first body portion 21 includes a first positive electrode plate 211 and a first negative electrode plate 212. The first positive electrode plate 211 includes a first current collector 211a and a first active material layer 211b. On the top of the first body portion 21, the first current collector 211a is longer than the first active material layer 211b. The first current collector 211a is in close contact with a top inner surface of the housing 1, thereby enhancing the effect of heat transfer between the first positive electrode plate 211 and the housing 1, enabling the heat to be dissipated out of the housing 1 in time, and effectively lowering the temperature of the battery cell 20. Both the second active material layer 211b and the first negative electrode plate 212 are at a preset distance from the top inner surface of the housing 1. Moreover, the first negative electrode plate 212 is longer than the first active material layer 211b.

As shown in FIG. 9, the second body portion 31 includes a second positive electrode plate 311 and a second negative electrode plate 312. The second positive electrode plate 311 includes a second current collector 311a and a second active material layer 311b. At the bottom of the second body portion 31, the second current collector 311a is longer than the second active material layer 311b. The second current collector 311a is in close contact with a bottom inner surface of the housing 1, thereby enhancing the effect of heat transfer between the second positive electrode plate 311 and the housing 1, enabling the heat to be dissipated out of the housing 1 in time, and effectively lowering the temperature of the battery cell 20. Both the second active material layer 311b and the second negative electrode plate 312 are at a preset distance from the bottom inner surface of the housing 1. Moreover, the second negative electrode plate 312 is longer than the second active material layer 311b.

As shown in FIG. 10 and FIG. 11, the first positive tab 22 and the first negative tab 23 extend from the first body portion 21 separately and are bent to form a U-shaped structure with an opening. The second positive tab 32 and the second negative tab 33 extend from the second body portion 31 separately and are bent to form a U-shaped structure with an opening.

The first negative electrode plate 212 includes a third current collector 212a and a third active material layer 212b. At a position close to the negative post 8 at the bottom of the first body portion 21, the third current collector 212a is longer than the third active material layer 212b, and the third current collector 212a is in contact with the first negative tab 23. Both the third active material layer 212b and the first positive electrode plate 211 are at a preset distance from the first negative tab 23. Moreover, the first positive electrode plate 211 is longer than the third active material layer 212b.

The second negative electrode plate 312 includes a fourth current collector 312a and a fourth active material layer 312b. At a position close to the negative post 8 on the top of the second body portion 31, the fourth current collector 312a is longer than the fourth active material layer 312b, and the fourth current collector 312a is in contact with the second negative tab 33. Both the fourth active material layer 312b and the second positive electrode plate 311 are at a preset distance from the second negative tab 33. Moreover, the second positive electrode plate 311 is longer than the fourth active material layer 312b.

Although not shown in FIG. 10, understandably, at a position close to the positive post 7 at the bottom of the first body portion 21, the first current collector 211a is longer than the first active material layer 211b, and the first current collector 211a is in contact with the first positive tab 22. Both the first active material layer 211b and the first negative electrode plate 212 are at a preset distance from the first positive tab 22. Moreover, the first negative electrode plate 212 is longer than the first active material layer 211b. At a position close to the positive post 7 at the bottom of the second body portion 31, the second current collector 311a is longer than the second active material layer 311b, and the second current collector 311a is in contact with the second positive tab 32. Both the second active material layer 311b and the second negative electrode plate 312 are at a preset distance from the second positive tab 32. Moreover, the second negative electrode plate 312 is longer than the second active material layer 311b.

As shown in FIG. 12 to FIG. 14, a bracket 4 is disposed between the first body portion 21 and the second body portion 31. The bracket 4 is in a U-shaped structure. The bracket 4 includes a first support portion 41, a second support portion 42, and a third support portion 43 connected between the first support portion 41 and the second support portion 42. The first support portion 41 and the second support portion 42 are in a plate structure. The first support portion 41 is inserted into openings formed on the first positive tab 22 and the first negative tab 23 separately. The second support portion 42 is inserted into openings formed on the second positive tab 32 and the second negative tab 33 separately.

In the embodiments shown in FIG. 15, FIG. 16, FIG. 18, and FIG. 19, the battery cell includes a first end cap 1a and a second end cap 1b. A first opening is made on the first side face of the housing 1, and a second opening is made on the second side face of the housing 1. The first end cap 1a is configured to seal the first opening, and the second end cap 1b is configured to seal the second opening. The positive post 7 is mounted on the first end cap 1a, and the negative post 8 is mounted on the second end cap 1b. The positive post 7 includes a first inner post 71 and a first outer post 72. The first sleeve 7a is mounted on the first end cap 1a. The first outer post 72 is disposed on an outer side of the first end cap 1a and connected to the first sleeve 7a. The first adapter piece 5 is connected to a first end of the first inner post 71. A second end of the first inner post 71 passes through the first sleeve 7a and is connected to the first sleeve 7a on an outer side of the housing 1. The negative post 8 includes a second inner post 81 and a second outer post 82. The second outer post 82 is disposed on the outer side of the second end cap 1b. A first end of the second inner post 81 is located on the inner side of the second end cap 1b and connected to the second adapter piece 6. A second end of the second inner post 81 passes through the second end cap 1b and is connected to the second outer post 82.

In the embodiments shown in FIG. 17 and FIG. 20, the negative post 8 includes a second inner post 81 and a second outer post 82. The second sleeve 8a is mounted on the second end cap 1b. The second outer post 82 is disposed on an outer side of the second end cap 1b and connected to the second sleeve 8a. The second adapter piece 6 is connected to a second end of the second inner post 81. The second end of the second inner post 81 passes through the second sleeve 8a and is connected to the second sleeve 8a on an outer side of the housing 1.

As shown in FIG. 15 to FIG. 17, in this embodiment, both the first adapter piece 5 and the second adapter piece 6 are flat and straight in shape. One end of the first adapter piece 5 is connected to the first positive tab 22 and the second positive tab 32, and the other end is connected to the positive post 7. One end of the second adapter piece 6 is connected to the first negative tab 23 and the second negative tab 33, and the other end is connected to the negative post 8.

As shown in FIG. 18 to FIG. 20, in this embodiment, both the first adapter piece 5 and the second adapter piece 6 are L-shaped. The first connecting portion 51 of the first adapter piece 5 is connected to the first positive tab 22 and the second positive tab 32. The second connecting portion 52 is connected to the positive post 7. The stability of electrical connection between the second connecting portion 52 and the positive post 7 can be enhanced by increasing the contact area between the second connecting portion 52 and the positive post 7. The third connecting portion 61 of the second adapter piece 6 is connected to the first negative tab 23 and the second negative tab 33. The fourth connecting portion 62 is connected to the negative post 8. The stability of electrical connection between the fourth connecting portion and the negative post 8 can be enhanced by increasing the contact area between the fourth connecting portion 62 and the negative post 8.

It should be noted and understood that there can be improvements and modifications made of the present invention described above without departing from the scope of the invention as set forth in the accompanying claims.

## Claims

1. A battery cell, comprising:
a housing (1) comprising a first and second side face, the second side face being opposite to the first side face;
a positive post (7) mounted on the first side face and a negative post (8) mounted on the second side face;
a first body portion (21), disposed in the housing (1), wherein the first body portion (21) comprises a first positive electrode plate (211) and a first negative electrode plate (212); and
a second body portion (31), disposed in the housing (1), wherein the second body portion (31) comprises a second positive electrode plate (311) and a second negative electrode plate (312),
wherein the first body portion (21) and the second body portion (31) are arranged at intervals along a first direction,
wherein the first body portion (21) and the second body portion (31) are both jelly-roll structures, and the first direction is the winding centerline of the first body portion (21) and the second body portion (31),
wherein the first side face and the second side face are parallel to the first direction,
an end of the first positive electrode plate (211), which is oriented away from the second body portion (31) along the first direction, protrudes beyond the first body portion (21) and contacts a first inner surface of the housing (1), and the first negative electrode plate (212) is insulated from the first inner surface of the housing (1); and/or, an end of the second positive electrode plate (311), which is oriented away from the first body portion (21) along the first direction, protrudes beyond the second body portion (31) and contacts a second inner surface of the housing (1), the second negative electrode plate (312) is insulated from the second inner surface of the housing (1), and the first inner surface is disposed opposite to the second inner surface.

2. The battery cell according to claim 1, wherein the first positive electrode plate (211) comprises a first current collector (211a) and a first active material layer (211b) formed on the first current collector (211a), and an end of the first current collector (211a), which is oriented away from the second body portion (31) along the first direction, protrudes beyond the first active material layer (211b) and contacts the first inner surface of the housing (1); the second positive electrode plate (311) comprises a second current collector (311a) and a second active material layer (311b) formed on the second current collector (311a), and an end of the second current collector (311a), which is oriented away from the first body portion (21) along the first direction, protrudes beyond the second active material layer (311b) and contacts the second inner surface of the housing (1).

3. The battery cell according to claim 1 or 2, wherein an end of the first negative electrode plate (212), which is oriented away from the second body portion (31) along the first direction, is at a first preset distance from the first inner surface of the housing (1), and an end of the second negative electrode plate (312), which is oriented away from the first body portion (21) along the first direction, is at a second preset distance from the second inner surface of the housing (1).

4. The battery cell according to any one of claims 1 to 3, further comprising a first positive tab (22) and a first negative tab (23) that extend from the first body portion (21) as well as a second positive tab (32) and a second negative tab (33) that extend from the second body portion (31), wherein the first positive tab (22) and the first negative tab (23) are disposed at an end of the first body portion (21), the end is close to the second body portion (31) along the first direction, the second positive tab (32) and the second negative tab (33) are disposed at an end of the second body portion (31), and the end is close to the first body portion (21) along the first direction.

5. The battery cell according to any one of claims 1 to 4, further comprising a bracket (4), wherein the bracket (4) is disposed between the first body portion (21) and the second body portion (31) to make the first positive electrode plate (211) keep in contact with the first inner surface of the housing (1), and to make the second positive electrode plate (311) keep in contact with the second inner surface of the housing (1),
wherein the bracket (4) comprises a first support portion (41), a second support portion (42), and a third support portion (43) connected between the first support portion (41) and the second support portion (42), the first support portion (41) serves as a support between the first body portion (21) and a first positive tab (22) and a support between the first body portion (21) and a first negative tab (23), and the second support portion (42) serves as a support between the second body portion (31) and a second positive tab (32) and a support between the second body portion (31) and a second negative tab (33).

6. The battery cell according to any one of claims 4 to 5, further comprising a first adapter piece (5) and a second adapter piece (6), wherein the first positive tab (22) and the second positive tab (32) are both connected to the first adapter piece (5), the first adapter piece (5) is connected to the positive post (7), the first negative tab (23) and the second negative tab (33) are both connected to the second adapter piece (6), and the second adapter piece (6) is connected to the negative post (8),
the battery cell further comprising a first end cap (1a) and a second end cap (1b), wherein a first opening is made on the first side face of the housing (1), a second opening is made on the second side face of the housing (1), the first end cap (1a) is configured to seal the first opening, and the second end cap (1b) is configured to seal the second opening
the battery cell further comprising a first sleeve (7a), wherein the positive post (7) comprises a first inner post (71) and a first outer post (72), the first sleeve (7a) is mounted on the first end cap (1a), the first outer post (72) is disposed on an outer side of the first end cap (1a) and connected to the first sleeve (7a), the first adapter piece (5) is connected to a first end of the first inner post (71), and a second end of the first inner post (71) passes through the first sleeve (7a) and is connected to the first sleeve (7a) on an outer side of the housing (1).

7. The battery cell according to claim 6, further comprising a second sleeve (8a), wherein the negative post (8) comprises a second inner post (81) and a second outer post (82), the second sleeve (8a) is mounted on the second end cap (1b), the second outer post (82) is disposed on an outer side of the second end cap (1b) and connected to the second sleeve (8a), the second adapter piece (6) is connected to a second end of the second inner post (81), and the second end of the second inner post (81) passes through the second sleeve (8a) and is connected to the second sleeve (8a) on an outer side of the housing (1).

8. The battery cell according to any one of claims 6 to 7, wherein the first adapter piece (5) comprises a first connecting portion (51) extending in a direction perpendicular to the first direction, the first connecting portion (51) is connected to the first positive tab (22) and the second positive tab (32), an end that is of the first connecting portion (51) and that is close to the positive post (7) is connected to the positive post (7); or, the first adapter piece (5) comprises a first connecting portion (51) extending in a direction perpendicular to the first direction and a second connecting portion (52) extending in a direction parallel to the first direction, the first connecting portion (51) and the second connecting portion (52) are connected to form an L shape, the first connecting portion (51) is connected to the first positive tab (22) and the second positive tab (32), and the second connecting portion (52) is connected to the positive post (7).

9. The battery cell according to any one of claims 6 to 11, wherein the second adapter piece (6) comprises a third connecting portion (61) extending in a direction perpendicular to the first direction, the third connecting portion (61) is connected to the first negative tab (23) and the second negative tab (33), an end that is of the third connecting portion (61) and that is close to the negative post (8) is connected to the negative post (8); or, the second adapter piece (6) comprises a third connecting portion (61) extending in a direction perpendicular to the first direction and a fourth connecting portion (62) extending in a direction parallel to the first direction, the third connecting portion (61) and the fourth connecting portion (62) are connected to form an L shape, the third connecting portion (61) is connected to the first negative tab (23) and the second negative tab (33), and the fourth connecting portion (62) is connected to the negative post (8).

10. The battery cell according to any one of claims 6 to 9, further comprising a first insulation piece (9) disposed in the housing (1), wherein the first insulation piece (9) is configured to electrically isolate the negative post (8) from the housing (1).

11. The battery cell according to any one of claims 1 to 10, wherein the first body portion (21) further comprises a first separator, the first body portion (21) is formed by winding the first positive electrode plate (211), the first negative electrode plate (212), and the first separator together, and the first direction is parallel to a winding centerline of the first body portion (21); and/or, the second body portion (31) further comprises a second separator, the second body portion (31) is formed by winding the second positive electrode plate (311), the second negative electrode plate (312), and the second separator together, and the first direction is parallel to a winding centerline of the second body portion (31).

12. The battery cell according to any one of claims 1 to 11, wherein the housing (1) is made of a metal material.

13. A battery, comprising the battery cell according to any one of claims 1 to 12.

14. An electrical device, comprising the battery according to claim 13, wherein the battery is configured to supply electrical energy to the electrical device.

15. A method for manufacturing a battery cell, comprising:
providing a housing (1) comprising a first and second side face, the second side face being opposite to the first side face, a positive post (7) mounted on the first side face and a negative post (8) mounted on the second side face; a first body portion (21), and a second body portion (31), wherein the first body portion (21) comprises a first positive electrode plate (211) and a first negative electrode plate (212), and the second body portion (31) comprises a second positive electrode plate (311) and a second negative electrode plate (312);
disposing both the first body portion (21) and the second body portion (31) in the housing (1); and
arranging the first body portion (21) and the second body portion (31) at intervals along a first direction, wherein the first body portion (21) and the second body portion (31) are both jelly-roll structures, and the first direction is the winding centerline of the first body portion (21) and the second body portion (31), wherein the first side face and the second side face are parallel to the first direction, wherein an end of the first positive electrode plate (211), which is oriented away from the second body portion (31) along the first direction, contacts a first inner surface of the housing (1), and an end of the first negative electrode plate (212), which is oriented away from the second body portion (31) along the first direction, is insulated from the first inner surface of the housing (1); and/or, an end of the second positive electrode plate (311), which is oriented away from the first body portion (21) along the first direction, contacts a second inner surface of the housing (1), an end of the second negative electrode plate (312), which is oriented away from the first body portion (21) along the first direction, is insulated from the second inner surface of the housing (1), and the first inner surface is disposed opposite to the second inner surface.

## Patentansprüche

1. Batteriezelle, umfassend:
ein Gehäuse (1), umfassend eine erste und zweite Seitenfläche, wobei die zweite Seitenfläche der ersten Seitenfläche gegenüberliegt;
einen Pluspol (7), der an der ersten Seitenfläche montiert ist, und einen Minuspol (8), der an der zweiten Seitenfläche montiert ist;
einen ersten Körperabschnitt (21), der in dem Gehäuse (1) positioniert ist, wobei der erste Körperabschnitt (21) eine erste positive Elektrodenplatte (211) und eine erste negative Elektrodenplatte (212) umfasst, und
einen zweiten Körperabschnitt (31), der in dem Gehäuse (1) positioniert ist, wobei der zweite Körperabschnitt (31) eine zweite positive Elektrodenplatte (311) und eine zweite negative Elektrodenplatte (312) umfasst,
wobei der erste Körperabschnitt (21) und der zweite Körperabschnitt (31) in Intervallen entlang einer ersten Richtung angeordnet sind,
wobei der erste Körperabschnitt (21) und der zweite Körperabschnitt (31) beide als Wickelstrukturen ausgebildet sind und die erste Richtung die Wickelmittellinie des ersten Körperabschnitts (21) und des zweiten Körperabschnitts (31) ist,
wobei die erste Seitenfläche und die zweite Seitenfläche parallel zur ersten Richtung verlaufen,
wobei ein Ende der ersten positiven Elektrodenplatte (211), das entlang der ersten Richtung von dem zweiten Körperabschnitt (31) abgewandt ausgerichtet ist, über den ersten Körperabschnitt (21) hinausragt und eine erste innere Oberfläche des Gehäuses (1) berührt und die erste negative Elektrodenplatte (212) von der ersten inneren Oberfläche des Gehäuses (1) isoliert ist und/oder ein Ende der zweiten positiven Elektrodenplatte (311), das entlang der ersten Richtung von dem ersten Körperabschnitt (21) abgewandt ausgerichtet ist, über den zweiten Körperabschnitt (31) hinausragt und eine zweite innere Oberfläche des Gehäuses (1) berührt, die zweite negative Elektrodenplatte (312) von der zweiten inneren Oberfläche des Gehäuses (1) isoliert ist und die erste innere Oberfläche der zweiten inneren Oberfläche gegenüberliegend positioniert ist.

2. Batteriezelle nach Anspruch 1, wobei die erste positive Elektrodenplatte (211) einen ersten Stromableiter (211a) und eine erste aktive Materialschicht (211b), die auf dem ersten Stromableiter (211a) ausgebildet ist, umfasst und ein Ende des ersten Stromableiters (211a), das entlang der ersten Richtung von dem zweiten Körperabschnitt (31) abgewandt ausgerichtet ist, über die erste aktive Materialschicht (211b) hinausragt und die erste innere Oberfläche des Gehäuses (1) berührt, wobei die zweite positive Elektrodenplatte (311) einen zweiten Stromableiter (311a) und eine zweite aktive Materialschicht (311b), die auf dem zweiten Stromableiter (311a) ausgebildet ist, umfasst und ein Ende des zweiten Stromableiters (311a), das entlang der ersten Richtung von dem ersten Körperabschnitt (21) abgewandt ausgerichtet ist, über die zweite aktive Materialschicht (311b) hinausragt und die zweite innere Oberfläche des Gehäuses (1) berührt.

3. Batteriezelle nach Anspruch 1 oder 2, wobei sich ein Ende der ersten negativen Elektrodenplatte (212), das entlang der ersten Richtung von dem zweiten Körperabschnitt (31) abgewandt ausgerichtet ist, in einem ersten vorgegebenen Abstand von der ersten inneren Oberfläche des Gehäuses (1) befindet und sich ein Ende der zweiten negativen Elektrodenplatte (312), das entlang der ersten Richtung von dem ersten Körperabschnitt (21) abgewandt ausgerichtet ist, in einem zweiten vorgegebenen Abstand von der zweiten inneren Oberfläche des Gehäuses (1) befindet.

4. Batteriezelle nach einem der Ansprüche 1 bis 3, ferner umfassend eine erste Pluslasche (22) und eine erste Minuslasche (23), die sich von dem ersten Körperabschnitt (21) erstrecken, sowie eine zweite Pluslasche (32) und eine zweite Minuslasche (33), die sich von dem zweiten Körperabschnitt (31) erstrecken, wobei die erste Pluslasche (22) und die erste Minuslasche (23) an einem Ende des ersten Körperabschnitts (21) positioniert sind, sich das Ende in der Nähe des zweiten Körperabschnitts (31) entlang der ersten Richtung befindet, die zweite Pluslasche (32) und die zweite Minuslasche (33) an einem Ende des zweiten Körperabschnitts (31) positioniert sind und sich das Ende in der Nähe des ersten Körperabschnitts (21) entlang der ersten Richtung befindet.

5. Batteriezelle nach einem der Ansprüche 1 bis 4, ferner umfassend eine Halterung (4), wobei die Halterung (4) zwischen dem ersten Körperabschnitt (21) und dem zweiten Körperabschnitt (31) positioniert ist, um dafür zu sorgen, dass die erste positive Elektrodenplatte (211) mit der ersten inneren Oberfläche des Gehäuses (1) in Kontakt gehalten wird, und um dafür zu sorgen, dass die zweite positive Elektrodenplatte (311) mit der zweiten inneren Oberfläche des Gehäuses (1) in Kontakt gehalten wird, wobei die Halterung (4) einen ersten Stützabschnitt (41), einen zweiten Stützabschnitt (42) und einen dritten Stützabschnitt (43), der zwischen dem ersten Stützabschnitt (41) und dem zweiten Stützabschnitt (42) verbunden ist, umfasst, wobei der erste Stützabschnitt (41) als Stütze zwischen dem ersten Körperabschnitt (21) und einer ersten Pluslasche (22) und als Stütze zwischen dem ersten Körperabschnitt (21) und einer ersten Minuslasche (23) dient und der zweite Stützabschnitt (42) als Stütze zwischen dem zweiten Körperabschnitt (31) und einer zweiten Pluslasche (32) und als Stütze zwischen dem zweiten Körperabschnitt (31) und einer zweiten Minuslasche (33) dient.

6. Batteriezelle nach einem der Ansprüche 4 bis 5, ferner umfassend ein erstes Adapterstück (5) und ein zweites Adapterstück (6), wobei die erste Pluslasche (22) und die zweite Pluslasche (32) beide mit dem ersten Adapterstück (5) verbunden sind, das erste Adapterstück (5) mit dem Pluspol (7) verbunden ist, die erste Minuslasche (23) und die zweite Minuslasche (33) beide mit dem zweiten Adapterstück (6) verbunden sind und das zweite Adapterstück (6) mit dem Minuspol (8) verbunden ist,
wobei die Batteriezelle ferner eine erste Endkappe (1a) und eine zweite Endkappe (1b) umfasst, wobei eine erste Öffnung auf der ersten Seitenfläche des Gehäuses (1) ausgebildet ist, eine zweite Öffnung auf der zweiten Seitenfläche des Gehäuses (1) ausgebildet ist, die erste Endkappe (1a) ausgelegt ist, um die erste Öffnung abzudichten, und die zweite Endkappe (1b) ausgelegt ist, um die zweite Öffnung abzudichten,
wobei die Batteriezelle ferner eine erste Hülse (7a) umfasst, wobei der Pluspol (7) einen ersten inneren Pol (71) und einen ersten äußeren Pol (72) umfasst, die erste Hülse (7a) auf der ersten Endkappe (1a) montiert ist, der erste äußere Pol (72) auf einer äußeren Seite der ersten Endkappe (1a) positioniert und mit der ersten Hülse (7a) verbunden ist, das erste Adapterstück (5) mit einem ersten Ende des ersten inneren Pols (71) verbunden ist und ein zweites Ende des ersten inneren Pols (71) durch die erste Hülse (7a) verläuft und mit der ersten Hülse (7a) an einer äußeren Seite des Gehäuses (1) verbunden ist.

7. Batteriezelle nach Anspruch 6, ferner umfassend eine zweite Hülse (8a), wobei der Minuspol (8) einen zweiten inneren Pol (81) und einen zweiten äußeren Pol (82) umfasst, die zweite Hülse (8a) auf der zweiten Endkappe (1b) montiert ist, der zweite äußere Pol (82) auf einer äußeren Seite der zweiten Endkappe (1b) positioniert und mit der zweiten Hülse (8a) verbunden ist, das zweite Adapterstück (6) mit einem zweiten Ende des zweiten inneren Pols (81) verbunden ist und das zweite Ende des zweiten inneren Pols (81) durch die zweite Hülse (8a) verläuft und mit der zweiten Hülse (8a) an einer äußeren Seite des Gehäuses (1) verbunden ist.

8. Batteriezelle nach einem der Ansprüche 6 bis 7, wobei das erste Adapterstück (5) einen ersten Verbindungsabschnitt (51) umfasst, der sich in eine Richtung senkrecht zur ersten Richtung erstreckt, der erste Verbindungsabschnitt (51) mit der ersten Pluslasche (22) und der zweiten Pluslasche (32) verbunden ist, ein Ende, das dem ersten Verbindungsabschnitt (51) angehört und das sich in der Nähe des Pluspols (7) befindet, mit dem Pluspol (7) verbunden ist oder das erste Adapterstück (5) einen ersten Verbindungsabschnitt (51), der sich in eine Richtung senkrecht zur ersten Richtung erstreckt, und einen zweiten Verbindungsabschnitt (52) umfasst, der sich in eine Richtung parallel zur ersten Richtung erstreckt, wobei der erste Verbindungsabschnitt (51) und der zweite Verbindungsabschnitt (52) so verbunden sind, dass sie eine L-Form bilden, wobei der erste Verbindungsabschnitt (51) mit der ersten Pluslasche (22) und der zweiten Pluslasche (32) verbunden ist und der zweite Verbindungsabschnitt (52) mit dem Pluspol (7) verbunden ist.

9. Batteriezelle nach einem der Ansprüche 6 bis 11, wobei das zweite Adapterstück (6) einen dritten Verbindungsabschnitt (61) umfasst, der sich in eine Richtung senkrecht zur ersten Richtung erstreckt, der dritte Verbindungsabschnitt (61) mit der ersten Minuslasche (23) und der zweiten Minuslasche (33) verbunden ist, ein Ende, das dem dritten Verbindungsabschnitt (61) angehört und das sich in der Nähe des Minuspols (8) befindet, mit dem Minuspol (8) verbunden ist oder das zweite Adapterstück (6) einen dritten Verbindungsabschnitt (61), der sich in eine Richtung senkrecht zur ersten Richtung erstreckt, und einen vierten Verbindungsabschnitt (62) umfasst, der sich in eine Richtung parallel zur ersten Richtung erstreckt, wobei der dritte Verbindungsabschnitt (61) und der vierte Verbindungsabschnitt (62) so verbunden sind, dass sie eine L-Form bilden, wobei der dritte Verbindungsabschnitt (61) mit der ersten Minuslasche (23) und der zweiten Minuslasche (33) verbunden ist und der vierte Verbindungsabschnitt (62) mit dem Minuspol (8) verbunden ist.

10. Batteriezelle nach einem der Ansprüche 6 bis 9, ferner umfassend ein erstes Isolierstück (9), das in dem Gehäuse (1) positioniert ist, wobei das erste Isolierstück (9) ausgelegt ist, um den Minuspol (8) elektrisch von dem Gehäuse (1) zu isolieren.

11. Batteriezelle nach einem der Ansprüche 1 bis 10, wobei der erste Körperabschnitt (21) ferner einen ersten Separator umfasst, der erste Körperabschnitt (21) durch gemeinsames Aufwickeln der ersten positiven Elektrodenplatte (211), der ersten negativen Elektrodenplatte (212) und des ersten Separators gebildet ist und die erste Richtung parallel zu einer Wickelmittellinie des ersten Körperabschnitts (21) verläuft und/oder der zweite Körperabschnitt (31) ferner einen zweiten Separator umfasst, der zweite Körperabschnitt (31) durch gemeinsames Aufwickeln der zweiten positiven Elektrodenplatte (311), der zweiten negativen Elektrodenplatte (312) und des zweiten Separators gebildet ist und die erste Richtung parallel zu einer Wickelmittellinie des zweiten Körperabschnitts (31) verläuft.

12. Batteriezelle nach einem der Ansprüche 1 bis 11, wobei das Gehäuse (1) aus einem Metallwerkstoff besteht.

13. Batterie, umfassend die Batteriezelle nach einem der Ansprüche 1 bis 12.

14. Elektrische Vorrichtung, umfassend die Batterie nach Anspruch 13, wobei die Batterie ausgelegt ist, um die elektrische Vorrichtung mit elektrischer Energie zu versorgen.

15. Verfahren zur Herstellung einer Batteriezelle, umfassend:
Bereitstellen eines Gehäuses (1), das eine erste und zweite Seitenfläche umfasst, wobei die zweite Seitenfläche der ersten Seitenfläche gegenüberliegt, einen an der ersten Seitenfläche montierten Pluspol (7) und einen an der zweiten Seitenfläche montierten Minuspol (8), einen ersten Körperabschnitt (21) und einen zweiten Körperabschnitt (31), wobei der erste Körperabschnitt (21) eine erste positive Elektrodenplatte (211) und eine erste negative Elektrodenplatte (212) umfasst und der zweite Körperabschnitt (31) eine zweite positive Elektrodenplatte (311) und eine zweite negative Elektrodenplatte (312) umfasst;
Positionieren sowohl des ersten Körperabschnitts (21) als auch des zweiten Körperabschnitts (31) in dem Gehäuse (1) und
Anordnen des ersten Körperabschnitts (21) und des zweiten Körperabschnitts (31) in Intervallen entlang einer ersten Richtung, wobei der erste Körperabschnitt (21) und der zweite Körperabschnitt (31) beide als Wickelstrukturen ausgebildet sind und die erste Richtung die Wickelmittellinie des ersten Körperabschnitts (21) und des zweiten Körperabschnitts (31) ist, wobei die erste Seitenfläche und die zweite Seitenfläche parallel zur ersten Richtung verlaufen, wobei ein Ende der ersten positiven Elektrodenplatte (211), das entlang der ersten Richtung von dem zweiten Körperabschnitt (31) abgewandt ausgerichtet ist, eine erste innere Oberfläche des Gehäuses (1) berührt und ein Ende der ersten negativen Elektrodenplatte (212), das entlang der ersten Richtung von dem zweiten Körperabschnitt (31) abgewandt ausgerichtet ist, von der ersten inneren Oberfläche des Gehäuses (1) isoliert ist und/oder ein Ende der zweiten positiven Elektrodenplatte (311), das entlang der ersten Richtung von dem ersten Körperabschnitt (21) abgewandt ausgerichtet ist, eine zweite innere Oberfläche des Gehäuses (1) berührt, ein Ende der zweiten negativen Elektrodenplatte (312), das entlang der ersten Richtung von dem ersten Körperabschnitt (21) abgewandt ausgerichtet ist, von der zweiten inneren Oberfläche des Gehäuses (1) isoliert ist und die erste innere Oberfläche der zweiten inneren Oberfläche gegenüberliegend positioniert ist.

## Revendications

1. Élément de batterie comprenant :
un boîtier (1) comprenant une première et une deuxième faces latérales, la deuxième face latérale étant opposée à la première face latérale ;
une borne positive (7) montée sur la première face latérale et une borne négative (8) montée sur la deuxième face latérale ;
une première partie de corps (21), disposée dans le boîtier (1), dans lequel la première partie de corps (21) comprend une première plaque d'électrode positive (211) et une première plaque d'électrode négative (212) ; et
une deuxième partie de corps (31), disposée dans le boîtier (1), dans lequel la deuxième partie de corps (31) comprend une deuxième plaque d'électrode positive (311) et une deuxième plaque d'électrode négative (312),
dans lequel la première partie de corps (21) et la deuxième partie de corps (31) sont disposées à des intervalles suivant une première direction,
dans lequel la première partie de corps (21) et la deuxième partie de corps (31) sont toutes deux des structures en rouleau enroulé, et la première direction correspond à l'axe d'enroulement de la première partie de corps (21) et de la deuxième partie de corps (31),
dans lequel la première face latérale et la deuxième face latérale sont parallèles à la première direction,
une extrémité de la première plaque d'électrode positive (211), qui est orientée à l'opposé de la deuxième partie de corps (31) suivant la première direction, dépasse de la première partie de corps (21) et est en contact avec une première surface intérieure du boîtier (1), et la première plaque d'électrode négative (212) est isolée de la première surface intérieure du boîtier (1) ;
et/ou une extrémité de la deuxième plaque d'électrode positive (311), qui est orientée à l'opposé de la première partie de corps (21) suivant la première direction, dépasse de la deuxième partie de corps (31) et est en contact avec une deuxième surface intérieure du boîtier (1), la deuxième plaque d'électrode négative (312) est isolée de la deuxième surface intérieure du boîtier (1), et la première surface intérieure est disposée à l'opposé de la deuxième surface intérieure.

2. Élément de batterie selon la revendication 1, dans lequel la première plaque d'électrode positive (211) comprend un premier collecteur de courant (211a) et une première couche de matière active (211b) formée sur le premier collecteur de courant (211a), et une extrémité du premier collecteur de courant (211a), qui est orientée à l'opposé de la deuxième partie de corps (31) suivant la première direction, dépasse de la première couche de matière active (211b) et est en contact avec la première surface intérieure du boîtier (1) ; la deuxième plaque d'électrode positive (311) comprend un deuxième collecteur de courant (311a) et une deuxième couche de matière active (311b) formée sur le deuxième collecteur de courant (311a), et une extrémité du deuxième collecteur de courant (311a), qui est orientée à l'opposé de la première partie de corps (21) suivant la première direction, dépasse de la deuxième couche de matière active (311b) et est en contact avec la deuxième surface intérieure du boîtier (1).

3. Élément de batterie selon la revendication 1 ou 2, dans lequel une extrémité de la première plaque d'électrode négative (212), qui est orientée à l'opposé de la deuxième partie de corps (31) suivant la première direction, se trouve à une première distance prédéfinie de la première surface intérieure du boîtier (1), et une extrémité de la deuxième plaque d'électrode négative (312), qui est orientée à l'opposé de la première partie de corps (21) suivant la première direction, se trouve à une deuxième distance prédéfinie de la deuxième surface intérieure du boîtier (1).

4. Élément de batterie selon l'une quelconque des revendications 1 à 3, comprenant en outre une première languette positive (22) et une première languette négative (23) qui s'étendent à partir de la première partie de corps (21), ainsi qu'une deuxième languette positive (32) et une deuxième languette négative (33) qui s'étendent à partir de la deuxième partie de corps (31), dans lequel la première languette positive (22) et la première languette négative (23) sont disposées à une extrémité de la première partie de corps (21), l'extrémité est proche de la deuxième partie de corps (31) suivant la première direction, la deuxième languette positive (32) et la deuxième languette négative (33) sont disposées à une extrémité de la deuxième partie de corps (31), et l'extrémité est proche de la première partie de corps (21) suivant la première direction.

5. Élément de batterie selon l'une quelconque des revendications 1 à 4, comprenant en outre un support (4), dans lequel le support (4) est disposé entre la première partie de corps (21) et la deuxième partie de corps (31) de manière à ce que la première plaque d'électrode positive (211) reste en contact avec la première surface intérieure du boîtier (1), et pour que la deuxième plaque d'électrode positive (311) reste en contact avec la deuxième surface intérieure du boîtier (1), dans lequel le support (4) comprend une première partie de support (41), une deuxième partie de support (42), et une troisième partie de support (43) reliée entre la première partie de support (41) et la deuxième partie de support (42), la première partie de support (41) sert de support entre la première partie de corps (21) et une première languette positive (22) et de support entre la première partie de corps (21) et une première languette négative (23), et la deuxième partie de support (42) sert de support entre la deuxième partie de corps (31) et une deuxième languette positive (32) et de support entre la deuxième partie de corps (31) et une deuxième languette négative (33).

6. Élément de batterie selon l'une quelconque des revendications 4 à 5, comprenant en outre une première pièce d'adaptation (5) et une deuxième pièce d'adaptation (6), dans lequel la première languette positive (22) et la deuxième languette positive (32) sont toutes deux reliées à la première pièce d'adaptation (5), la première pièce d'adaptation (5) est reliée à la borne positive (7), la première languette négative (23) et la deuxième languette négative (33) sont toutes deux reliées à la deuxième pièce d'adaptation (6), et la deuxième pièce d'adaptation (6) est reliée à la borne négative (8),
l'élément de batterie comprenant en outre un premier capuchon d'extrémité (1a) et un deuxième capuchon d'extrémité (1b), dans lequel une première ouverture est pratiquée sur la première face latérale du boîtier (1), une deuxième ouverture est pratiquée sur la deuxième face latérale du boîtier (1), le premier capuchon d'extrémité (1a) est configuré pour obturer la première ouverture, et le deuxième capuchon d'extrémité (1b) est configuré pour obturer la deuxième ouverture
l'élément de batterie comprenant en outre un premier manchon (7a), dans lequel la borne positive (7) comprend une première borne intérieure (71) et une première borne extérieure (72), le premier manchon (7a) est monté sur le premier capuchon d'extrémité (1a), la première borne extérieure (72) est disposée sur un côté extérieur du premier capuchon d'extrémité (1a) et reliée au premier manchon (7a), la première pièce d'adaptation (5) est reliée à une première extrémité de la première borne intérieure (71), et une seconde extrémité de la première borne intérieure (71) traverse le premier manchon (7a) et est reliée au premier manchon (7a) sur un côté extérieur du boîtier (1).

7. Élément de batterie selon la revendication 6, comprenant en outre un deuxième manchon (8a), dans lequel la borne négative (8) comprend une deuxième borne intérieure (81) et une deuxième borne extérieure (82), le deuxième manchon (8a) est monté sur le deuxième capuchon d'extrémité (1b), la deuxième borne extérieure (82) est disposée sur un côté extérieur du deuxième capuchon d'extrémité (1b) et reliée au deuxième manchon (8a), la deuxième pièce d'adaptation (6) est reliée à une deuxième extrémité de la deuxième borne intérieure (81), et la deuxième extrémité de la deuxième borne intérieure (81) traverse le deuxième manchon (8a) et est reliée au deuxième manchon (8a) sur un côté extérieur du boîtier (1).

8. Élément de batterie selon l'une quelconque des revendications 6 à 7, dans lequel la première pièce d'adaptation (5) comprend une première partie de connexion (51) s'étendant dans une direction perpendiculaire à la première direction, la première partie de connexion (51) est reliée à la première languette positive (22) et à la deuxième languette positive (32), une extrémité, qui appartient à la première partie de connexion (51) et qui est proche de la borne positive (7), est reliée à la borne positive (7) ; ou la première pièce d'adaptation (5) comprend une première partie de connexion (51) s'étendant dans une direction perpendiculaire à la première direction et une deuxième partie de connexion (52) s'étendant dans une direction parallèle à la première direction, la première partie de connexion (51) et la deuxième partie de connexion (52) sont reliées pour former un L, la première partie de connexion (51) est reliée à la première languette positive (22) et à la deuxième languette positive (32), et la deuxième partie de connexion (52) est reliée à la borne positive (7).

9. Élément de batterie selon l'une quelconque des revendications 6 à 11, dans lequel la deuxième pièce d'adaptation (6) comprend une troisième partie de connexion (61) s'étendant dans une direction perpendiculaire à la première direction, la troisième partie de connexion (61) est reliée à la première languette négative (23) et à la deuxième languette négative (33), une extrémité, qui appartient à la troisième partie de connexion (61) et qui est proche de la borne négative (8), est reliée à la borne négative (8) ; ou la deuxième pièce d'adaptation (6) comprend une troisième partie de connexion (61) s'étendant dans une direction perpendiculaire à la première direction et une quatrième partie de connexion (62) s'étendant dans une direction parallèle à la première direction, la troisième partie de connexion (61) et la quatrième partie de connexion (62) sont reliées pour former un L, la troisième partie de connexion (61) est reliée à la première languette négative (23) et à la deuxième languette négative (33), et la quatrième partie de connexion (62) est reliée à la borne négative (8).

10. Élément de batterie selon l'une quelconque des revendications 6 à 9, comprenant en outre une première pièce d'isolation (9) disposée dans le boîtier (1), dans lequel la première pièce d'isolation (9) est configurée pour isoler électriquement la borne négative (8) par rapport au boîtier (1).

11. Élément de batterie selon l'une quelconque des revendications 1 à 10, dans lequel la première partie de corps (21) comprend en outre un premier séparateur, la première partie de corps (21) est formée en enroulant ensemble la première plaque d'électrode positive (211), la première plaque d'électrode négative (212) et le premier séparateur, et la première direction est parallèle à un axe d'enroulement de la première partie de corps (21) ; et/ou la deuxième partie de corps (31) comprend en outre un deuxième séparateur, la deuxième partie de corps (31) est formée en enroulant ensemble la deuxième plaque d'électrode positive (311), la deuxième plaque d'électrode négative (312) et le deuxième séparateur, et la première direction est parallèle à un axe central d'enroulement de la deuxième partie de corps (31).

12. Élément de batterie selon l'une quelconque des revendications 1 à 11, dans lequel le boîtier (1) est réalisé en un matériau métallique.

13. Batterie comprenant l'élément de batterie selon l'une quelconque des revendications 1 à 12.

14. Dispositif électrique, comprenant la batterie selon la revendication 13, dans lequel la batterie est configurée pour fournir de l'énergie électrique au dispositif électrique.

15. Procédé de fabrication d'un élément de batterie (7), comprenant :
la fourniture d'un boîtier (1) comprenant une première et une deuxième faces latérales, la deuxième face latérale étant opposée à la première face latérale, une borne positive (7) montée sur la première face latérale et une borne négative (8) montée sur la deuxième face latérale ;
une première partie de corps (21) et une deuxième partie de corps (31), dans lequel la première partie de corps (21) comprend une première plaque d'électrode positive (211) et une première plaque d'électrode négative (212), et la deuxième partie de corps (31) comprend une deuxième plaque d'électrode positive (311) et une deuxième plaque d'électrode négative (312) ;
la disposition à la fois de la première partie de corps (21) et de la deuxième partie de corps (31) dans le boîtier (1) ; et
l'agencement de la première partie de corps (21) et de la deuxième partie de corps (31) à des intervalles suivant une première direction, dans lequel la première partie de corps (21) et la deuxième partie de corps (31) sont toutes deux des structures en rouleau enroulé, et la première direction correspond à l'axe d'enroulement de la première partie de corps (21) et de la deuxième partie de corps (31), dans lequel la première face latérale et la deuxième face latérale sont parallèles à la première direction, dans lequel une extrémité de la première plaque d'électrode positive (211), qui est orientée à l'opposé de la deuxième partie de corps (31) suivant la première direction, est en contact avec une première surface intérieure du boîtier (1), et une extrémité de la première plaque d'électrode négative (212), qui est orientée à l'opposé de la deuxième partie de corps (31) suivant la première direction, est isolée de la première surface intérieure du boîtier (1) ; et/ou une extrémité de la deuxième plaque d'électrode positive (311), qui est orientée à l'opposé de la première partie de corps (21) dans la première direction, est en contact avec une deuxième surface intérieure du boîtier (1), une extrémité de la deuxième plaque d'électrode négative (312), qui est orientée à l'opposé de la première partie de corps (21) selon la première direction, est isolée de la deuxième surface intérieure du boîtier (1), et la première surface intérieure est disposée à l'opposé de la deuxième surface intérieure.
